# EUROPEAN PATENT SPECIFICATION

(11) **EP 3 162 574 B1**
(45) Date of publication and mention of the grant of the patent: **12.12.2018**
(21) Application number: 16002239.8
(22) Date of filing: 18.10.2016
(51) Int. Cl.: B41J 2/21, B41J 2/205, G06K 15/10, B41J 2/515

(54) **IMAGE PROCESSING APPARATUS AND IMAGE PROCESSING METHOD**
BILDVERARBEITUNGSVORRICHTUNG UND BILDVERARBEITUNGSVERFAHREN
APPAREIL ET PROCÉDÉ DE TRAITEMENT DES IMAGES

(30) Priority: 30.10.2015 JP 2015214755
(43) Date of publication of application: 03.05.2017
(73) Proprietor: Canon Kabushiki Kaisha, Ohta-ku Tokyo (JP)
(72) Inventor: Ushiyama, Takayuki, Tokyo (JP); Marumoto, Yoshitomo, Tokyo (JP); Mabuchi, Hidehisa, Tokyo (JP); Tsuboi, Hitoshi, Tokyo (JP)
(74) Representative: WESER & Kollegen

(56) References cited:
- EP-A1- 2 422 984
- JP-A- 2010 228 286
- US-A1- 2011 254 888

## Description

### BACKGROUND OF THE INVENTION

### Field of the Invention

The present invention relates to an image processing apparatus and an image processing method used to print an image on a printing medium by ejecting inks thereto.

### Description of the Related Art

In an inkjet printing apparatus, a single pass printing system has been used which forms an image by once relative scanning operation between an elongated printing head and a printing medium. Such a single pass printing system has an advantage that an image is output at a high speed. Meanwhile, the ejection characteristics of nozzles arranged in a printing head easily appear on the printing medium and thus density unevenness is caused in many cases.

Japanese Patent Laid-Open No. 2010-228286 discloses a configuration that suppresses density unevenness by relatively increasing an ejection amount of a nozzle at a position where a white streak is generated in an image.

Incidentally, in recent years, there has been a demand for handling a printing medium having low ink absorbability and used in offset printing. In the printing medium having low ink absorbability, there is a case where a new ink droplet may be applied to a position adjacent to precedent ink droplets before the ink droplets applied to the printing medium are sufficiently absorbed to the printing medium. As a result, new density unevenness can be caused due to the attraction between the ink droplets. In the case of the single pass printing system, a sequence of applying the ink droplets onto the printing medium is dependent on the layout of the nozzles in the printing head and thus the density unevenness state is also dependent on the nozzle layout.

Then, such density unevenness cannot be sufficiently reduced since the attraction between the ink droplets is not suppressed even when the ejection amount is adjusted by Japanese Patent Laid-Open No. 2010-228286.

### SUMMARY OF THE INVENTION

The invention is made to solve the above-described problems.

The present invention in its first aspect provides an image processing apparatus as specified in claims 1 to 10.

The present invention in its second aspect provides an image processing method as specified in claim 11 to 15.

Further features of the present invention will become apparent from the following description of exemplary embodiments (with reference to the attached drawings).

### BRIEF DESCRIPTION OF THE DRAWINGS

Fig. 1 is an internal configuration diagram illustrating an inkjet printing apparatus which can be used in the invention;
Fig. 2 is a view illustrating a printing head when viewed from a nozzle face side;
Fig. 3 is a block diagram illustrating a control configuration of an image processing system which can be used in the invention;
Fig. 4 is a block diagram illustrating an image process step which is performed by a host device and a printing apparatus;
Figs. 5A to 5C are diagrams illustrating a density unevenness generation mechanism;
Fig. 6 is a diagram illustrating a correlation between a nozzle row and a threshold value matrix;
Fig. 7 is a diagram illustrating an example of a threshold value matrix which can be used in a first embodiment;
Fig. 8 is a diagram illustrating a printing pixel arrangement state when a uniform image data is input;
Fig. 9 is a diagram illustrating a different example of the threshold value matrix which can be used in the first embodiment;
Fig. 10 is a diagram illustrating a modified example of a nozzle layout;
Fig. 11 is a diagram showing the relationship of Figs. 11A to 11H;
Figs. 11A to 11H are diagrams illustrating an example of the threshold value matrix;
Fig. 12 is a diagram illustrating an average value of threshold values corresponding to nozzles in the Y direction;
Fig. 13 is a diagram illustrating a printing pixel arrangement state when a uniform image data is input;
Fig. 14 is a diagram illustrating the number of printing pixels corresponding to nozzles;
Fig. 15 is a view illustrating a printing head used in a second embodiment when viewed from a nozzle face side;
Figs. 16A and 16B are diagrams illustrating a density unevenness generation state;
Figs. 17A and 17B are diagrams illustrating an average value of a threshold value and a threshold value matrix;
Fig. 18 is a diagram illustrating an example of a threshold value matrix used in a third embodiment;
Fig. 19 is a diagram illustrating a printing pixel arrangement state when a uniform image data is input;
Fig. 20 is a diagram illustrating an example of a distribution coefficient used in an error diffusion process;
Fig. 21 is a coefficient table used in a fourth embodiment;
Fig. 22 is a block diagram illustrating an image process step which is performed by a host device and a printing apparatus;
Fig. 23 is a coefficient table used in a fifth embodiment;
Fig. 24 is a diagram illustrating a printing pixel arrangement state when a uniform image data is input; and
Figs. 25A and 25B are diagrams illustrating different examples of a system configuration and a process step.

### DESCRIPTION OF THE EMBODIMENTS

### <Schematic Configuration of Image Processing System>

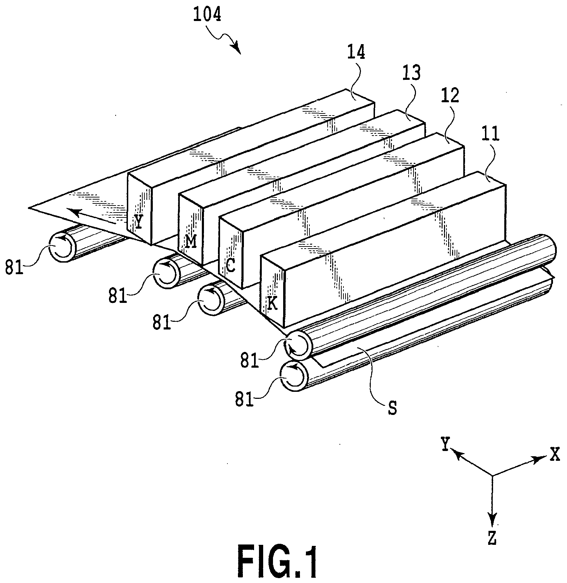

Fig. 1 is a perspective view illustrating an internal configuration of an inkjet printing apparatus 104 which can be used in the invention. A printing medium S which is nipped by a plurality of conveying rollers 81 is conveyed at a constant speed in the Y direction and printing heads 11 to 14 which apply inks to the printing medium S according to ejection data are arranged in a printing medium conveying path. The printing head 11 ejects a black ink in the Z direction, the printing head 12 ejects a cyan ink in the Z direction, the printing head 13 ejects a magenta ink in the Z direction, and the printing head 14 ejects a yellow ink in the Z direction.

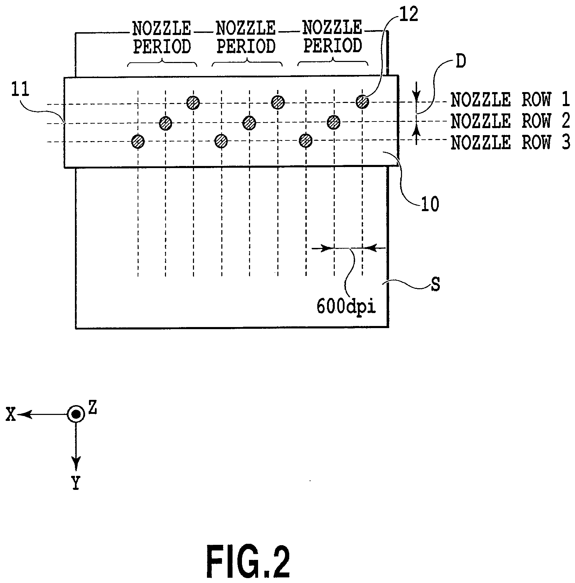

Fig. 2 is a diagram illustrating a nozzle face of the printing heads 11 to 14. Here, an example of the black ink printing head 11 will be described, but the other printing heads 12 to 14 also have the same configuration. Nozzles 12 which eject inks as droplets are arranged in a nozzle face 10 at the same pitch (here, 600 dpi (dot/inch)) in the X direction intersecting the Y direction which is a conveying direction. At this time, the nozzles 12 which are adjacent in the X direction are arranged at the period of three nozzles with a gap D in the Y direction. That is, a nozzle row 1, a nozzle row 2, and a nozzle row 3 formed by the plurality of nozzles 12 arranged at the period of three pixels in the X direction are arranged in the nozzle face 10 with the gap D in the Y direction. Each nozzle 12 ejects an ink at a frequency corresponding to the conveying speed of the printing medium S according to the ejection data.

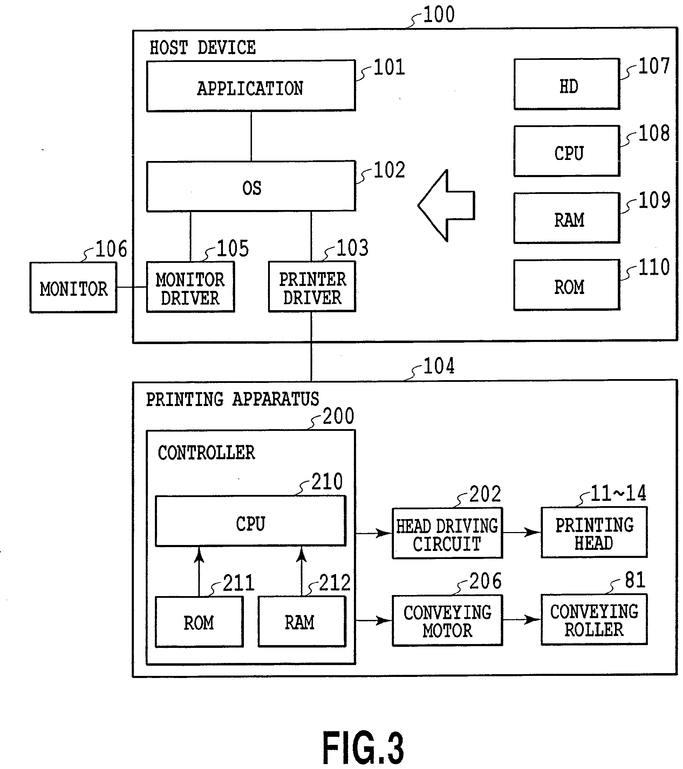

Fig. 3 is a block diagram illustrating a control configuration of an image processing system which can be used in the invention. Here, an example of an image processing system including the inkjet printing apparatus 104 and a host device 100 will be described.

In the host device 100, a CPU 108 performs various processes while using a RAM 109 as a work area according to various programs stored in a hard disk (HD) 107 or a ROM 110. Specifically, each software of an application 101, a printer driver 103, and a monitor driver 105 is operated via an operating system 102.

The monitor driver 105 is software which performs a process of generating an image data to be displayed on a monitor 106. The printer driver 103 is software which converts an image data transmitted from the application 101 to the OS 102 into an image data to be received by the printing apparatus 104 and transmits the converted image data to the printing apparatus 104 later.

In the printing apparatus 104, a controller 200 includes a ROM 211 and a RAM 212 other than a CPU 210 configured as a microprocessor. The controller 200 controls the entire printing apparatus while using the RAM 212 as a work area in accordance with a program or various parameters stored in the ROM 211 by the use of the CPU 210. Specifically, the controller 200 controls a head driving circuit 202 to eject inks from the nozzles while correlating the received ejection data to the nozzles of the printing heads 11 to 14. Further, the controller 200 rotates the conveying rollers 81 via a conveying motor 206 so that the printing medium S is conveyed at a conveying speed corresponding to the ejection frequencies of the printing heads 11 to 14.

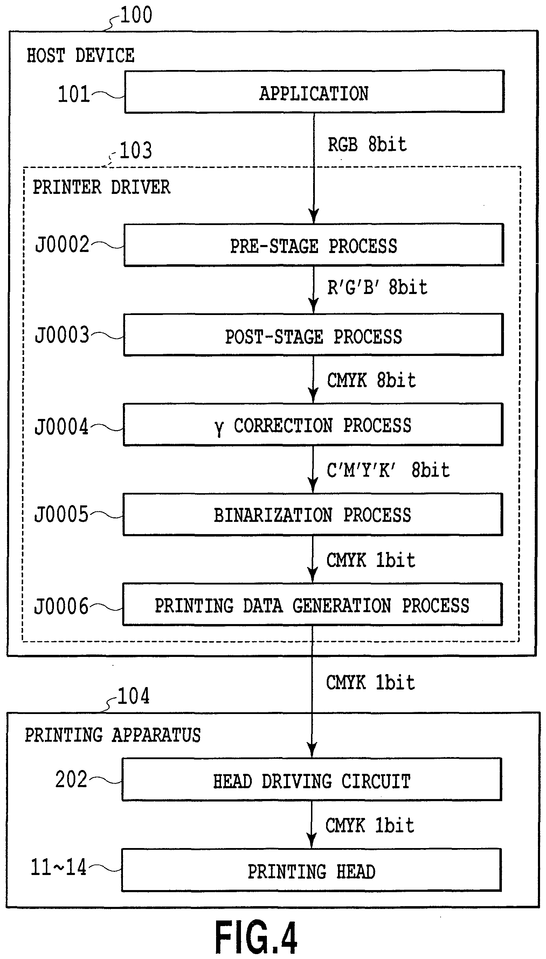

Fig. 4 is a block diagram illustrating an image process step which is performed by the host device 100 and the printing apparatus 104.

In the host device 100, a user can generate an image data to be printed by the printing apparatus 104 based on the application 101. When the user inputs a printing command, the image data which is generated by the application 101 is transmitted to the printer driver 103.

The printer driver 103 sequentially performs a pre-stage process J0002, a post-stage process J0003, a γ correction process J0004, a binarization process J0005, and a printing data generation process J0006 for the received image data. Hereinafter, these processes will be described in detail.

In the pre-stage process J0002, a color gamut which can be displayed on the monitor 106 by the application 101 is converted into a color gamut which can be expressed by the printing apparatus 104. Specifically, an RGB image data represented by eight bits is converted into an R'G'B' image data represented by the same eight bits based on a three-dimensional LUT stored in the ROM 110.

In the post-stage process J0003, the R'G'B' image data is converted into a multi-value data representing image density values of four colors of inks C, M, Y, and K ejected from the printing heads 11 to 14 mounted on the printing apparatus 104. Specifically, the 8-bit R'G'B' image data obtained in the pre-stage process J0002 is converted into an 8-bit CMYK data based on the three-dimensional LUT stored in the ROM 110.

In the subsequent γ correction process J0004, the γ correction process is performed on each of the multi-value CMYK datas obtained by the post-stage process J0003. Specifically, the 8-bit CMYK data is converted into an 8-bit C'M'Y'K' data based on a one-dimensional LUT correlated with each ink color. By the γ correction process J0004, the multi-value CMYK data and the density expressed on the printing medium become have a linear relation.

In the binarization process J0005, the 8-bit C'M'Y'K' data subjected to the γ correction process is converted into a 1-bit CMYK data by a predetermined quantization process. In the binarized image data, 1-bit information sets whether to printing (1) or non-printing (0) of dot in each pixel corresponding to the printing resolution of the printing apparatus 104.

In the printing data generation process J0006, a printing data is generated in such a manner that control information involving a printing operation, such as printing medium information, printing quality information, and feeding way information are given to 1-bit data generated by the binarization process J0005 for four colors. The printing data which is generated as described above is supplied from the host device 100 to the printing apparatus 104.

Subsequently, a binarized image data supplied to the printing apparatus 104 is converted into the ejection data correlated to each nozzle of the printing heads 11 to 14 and is transmitted to the head driving circuit 202. Then, an image is printed on the printing medium S while the inks are ejected from the nozzles arranged on the printing heads 11 to 14 at an appropriate timing.

### <Density Unevenness Generation Mechanism>

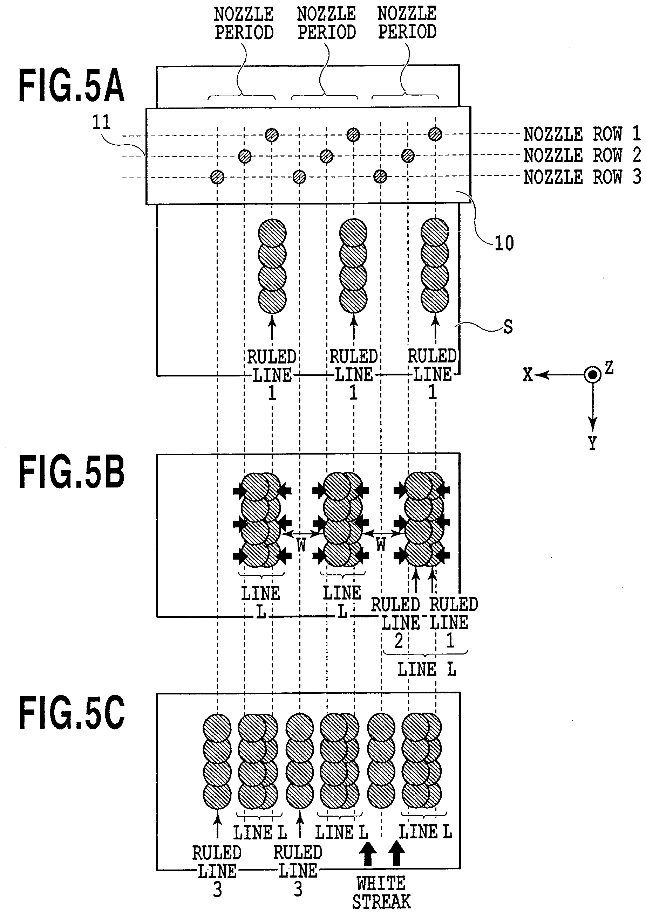

Figs. 5A to 5C are diagrams illustrating a density unevenness generation mechanism when an image is printed on the printing medium S having low ink absorbability by the printing head 11 in accordance with a single pass printing system. As illustrated in Fig. 2, the nozzle row 1, the nozzle row 2, and the nozzle row 3 are arranged on the printing head 11 to have a gap D in the Y direction.

Here, for example, a case will be supposed in which a rule line extending in the X direction is printed by the printing head 11. At this time, inks are first ejected from the nozzles of the nozzle row 1 at the most upstream side in the conveying direction and inks are ejected from the nozzles of the nozzle row 2 at a timing in which the printing medium S is conveyed by a distance corresponding to the gap D. Then, inks are ejected from the nozzles of the nozzle row 3 at the most downstream side in the conveying direction at a timing in which the printing medium S is further conveyed by a distance corresponding to the gap D. Accordingly, the ruled line consisting of a plurality of dots that are continuously arranged in the X direction is formed on the printing medium S.

Fig. 5A illustrates a state where an image of a duty ratio of 33% is printed on the printing medium S having low ink absorbability only by the ejection operation of the nozzle row 1. The ruled line 1 extending in the Y direction is arranged at the same interval every other three pixels in the X direction and there is no deviation in the X direction.

Fig. 5B illustrates a state where an image of a duty ratio of 66% is printed on the printing medium S like Fig. 5A by the ejection operations of the nozzle row 1 and the nozzle row 2. The ink droplets ejected by the nozzle row 2 are printed near the ink droplets ejected by the nozzle row 1 before the ink droplets are absorbed by the printing medium S. For this reason, these ink droplets contact one another and are attracted to one another by the surface tension thereof. As a result, the ruled line 1 and the ruled line 2 extending in the Y direction move in the X direction to approach each other and a line L is formed by the combination of two ruled lines. A white paper area W is exposed between the line L and the line L. However, the white paper area W has a large width compared with the case where the attraction does not occur, that is, an image is printed on the printing medium having high ink absorbability.

Fig. 5C illustrates a state where an image of a duty ratio of 100% is printed on the printing medium S like Figs. 5A and 5B by the ejection operations of the nozzle row 1 to the nozzle row 3. As described above with reference to Fig. 5B, the ruled line 1 printed by the nozzle row 1 and the ruled line 2 printed by the nozzle row 2 are attracted to one another and the ink droplet ejected from the nozzle row 3 is landed on the substantial center of the relatively large white paper area W. For this reason, the ink droplet ejected from the nozzle row 3 cannot easily contact the ruled line 1 or the ruled line 2 and the position is not deviated in the X direction. As a result, the ruled line 1 and the ruled line 2 which are printed at the near positions and the ruled line 3 which is printed at a position separated therefrom are alternately arranged in the X direction and thus a regular white streak is generated in an image. Accordingly, the white streak is detected as density unevenness.

Such density unevenness is dependent on a landing sequence onto the printing medium S and the landing sequence is dependent on the layout of the nozzles in the printing head. Then, a white streak easily appears at a position where an image is printed by the inks ejected from the nozzles at a relatively late timing like the nozzle row 3 and the density at the position is detected as a low value. The inventors have carefully examined such circumstances and considered that an image process could be effectively performed when the number of times of ejecting inks from the nozzle row ejecting the inks to the printing medium at a relatively late timing like the nozzle row 3 is larger than the number of times of ejecting inks in the other nozzle rows.

Hereinafter, a detailed example of an image process in which the number of times of ejecting inks to the printing medium at a relatively late timing is larger than those of the other nozzles will be described as a plurality of embodiments. In any embodiment, the inkjet printing system described in Figs. 1 to 4 is employed.

### (First Embodiment)

In a first embodiment, the number of times of ejecting inks from the nozzle row 3 is set to be larger than those of the other nozzles by the characteristic of the binarization process J0005 illustrated in Fig. 4. Specifically, the number of times of ejecting inks from the nozzle row 3 is set to be larger than those of the other nozzles in such a manner that a dither process is employed as the binarization process J0005 while referring a characterized threshold value matrix.

In the dither process, the value of the multi-value C'M'Y'K' data input to each pixel is compared with a threshold value set for each pixel and the printing (1) or non-printing (0) of the dot in the corresponding pixel are determined. When the input multi-value data is an 8-bit data having a value of 0 to 255, the threshold value can be set to a value of 1 to 255. Then, the printing (1) is determined in the pixel of which a threshold value equal to or smaller than the signal value of the input multi-value data is set and the non-printing (0) is determined in the pixel of which a threshold value larger than the signal value is set. That is, there is a high possibility that the printing (1) is determined in the pixel having a relatively small threshold value compared with the pixel having a relatively large threshold value.

In the embodiment, the threshold value of the pixel corresponding to the nozzle row 3 is set to be smaller than the threshold value of the pixel corresponding to the nozzle row 1 or the nozzle row 2 in view of such circumstances and thus the number of times of ejecting inks from the nozzle row 3 is set to be larger than those of the other nozzle rows.

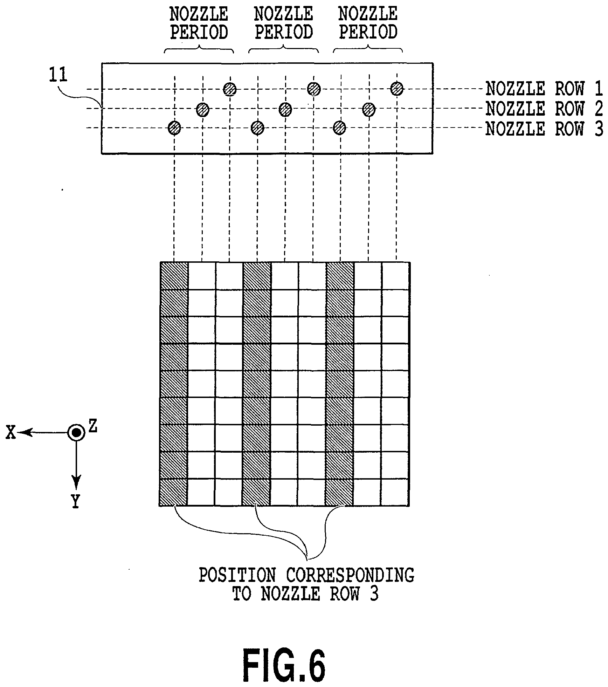

Fig. 6 is a diagram illustrating a correlation between the threshold value matrix and the nozzle row 1 to the nozzle row 3. For the description herein, a threshold value matrix is illustrated which has an area of nine pixels in the X direction and nine pixels in the Y direction, but the actual threshold value matrix has a larger area. Then, the size is not particularly limited. In Fig. 6, a threshold value area corresponding to the nozzle row 3 of which the ink ejecting timing for the printing medium is the latest is depicted in gray. In the embodiment, a threshold value matrix is used in which the average value of the threshold value set in the pixel area depicted in gray is smaller than the average values of the threshold values set in the other pixel areas.

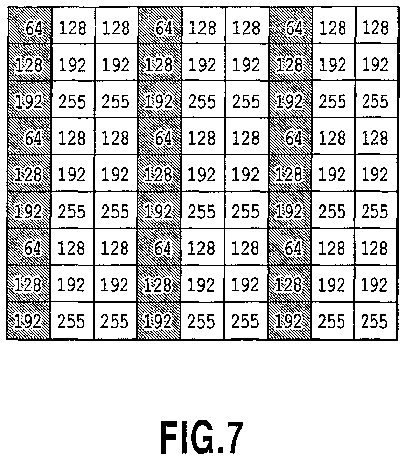

Fig. 7 is a diagram illustrating an example of the threshold value matrix which can be used in the embodiment. In Fig. 7, the average value of the threshold value for the pixel row depicted in gray becomes 128. Meanwhile, the average value of the threshold value in the other area becomes 192. That is, the number of ejecting inks from the nozzles included in the nozzle row 3 can be set to be larger than the number of ejecting inks from the nozzles included in the nozzle row 1 or the nozzle row 2 in an area subjected to the dither process by using the threshold value matrix illustrated in Fig. 7.

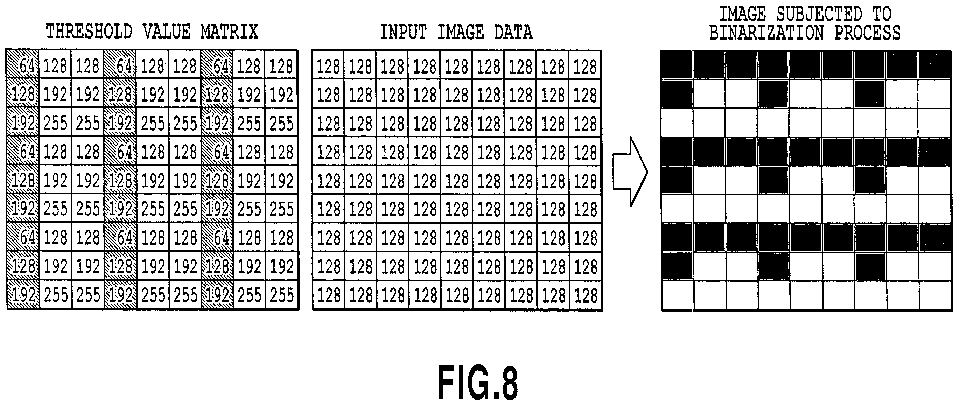

Fig. 8 is a diagram illustrating the arrangement state of printing pixels (1) when an image data having a signal value of 128 is uniformly input to an area of nine pixels by nine pixels in a configuration in which a binarization process is performed by the threshold value matrix illustrated in Fig. 7. In the pixel in which the threshold value equal to or smaller than 128 is set, the printing (1) is determined and is depicted in black in Fig. 7. In the pixel in which the threshold value larger than 128 is set, the non-printing (0) is determined and is depicted in white in Fig. 7. As understood from Fig. 7, the number of the printing pixels corresponding to the nozzle row 3 becomes larger than the number of the printing pixels corresponding to the other nozzle rows. For this reason, it is possible to increase the number of the ink droplets ejected from the nozzle row 3 while suppressing the contact and the movement of the ink droplet printed on the printing medium by the nozzle row 1 and the ink droplet printed thereon by the nozzle row 2. As a result, it is possible to suppress a white streak from being generated at the position of the nozzle row 3.

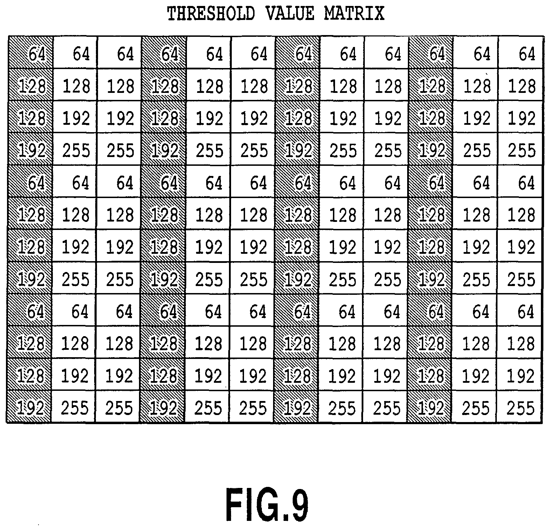

Fig. 9 is a diagram illustrating a different example of the threshold value matrix which can be used in the present embodiment. The set threshold value distribution is different from that of the threshold value matrix illustrated in Fig. 7. In Fig. 7, the threshold values of 64 to 192 are uniformly distributed in the pixels corresponding to the nozzle row 3 and the threshold values of 128 to 255 are uniformly distributed in the pixels corresponding to the other nozzle rows. On the contrary, in Fig. 9, the threshold values of 64 to 255 are distributed to have a peak of 128 in the pixels corresponding to the nozzle row 3 and the threshold values of 128 to 255 are uniformly distributed in the pixels corresponding to the other nozzle rows.

In a case where the threshold value matrix illustrated in Fig. 9 is used, a ratio between the number of times of ejecting inks from the nozzle row 3 and the number of times of ejecting inks from the other nozzle rows changes in response to a gray level. Specifically, the number of times of ejecting inks in the entire nozzle rows is uniform in a low-density area (having a signal value smaller than 128) in which graininess easily stands out, but the number of times of ejecting inks from the nozzle row 3 becomes larger than those of the other nozzle rows in an intermediate density area (having a signal value equal to or larger than 128) in which a white streak easily stands out. Thus, in a heighted area where graininess is easily-noticeable a high dispersion property can be maintained and in an intermediate density area where a white streak is easily-noticeable the dots can be deviated to the nozzle row 3. As a result, it is possible to obtain satisfactory uniformity in the entire grayscale.

In two kinds of threshold value matrixes illustrated in Figs. 7 and 9, the threshold value distribution is different. However, in any one of them, the average value of the threshold value corresponding to the nozzle row 3 easily causing a white streak is suppressed to be smaller than the average value of the threshold values in the other areas. As a result, the number of the dots printed at the position of the nozzle row 3 becomes larger than those of the other nozzle rows and thus a white streak can be suppressed.

In order to simplify the description above, an example of the threshold value matrix which has an area of nine pixels by nine pixels and in which four levels of threshold values (64, 128, 192, 255) are set has been described. However, the actual threshold value matrix has a large image area and the threshold values of 1 to 255 are arranged to be distributed. At this time, it is desirable to use the threshold value matrix in which the number of pixels is an integer times the period of the nozzle row in the X direction. For example, since the nozzles of each nozzle row are arranged at the period of three pixels in the X direction in the printing head 11 of the present embodiment, it is desirable that the number of pixels be the multiple of three pixels in the X direction. Then, it is desirable to have a pixel area by the integer times the nozzle row arrangement period in the X direction so that the number of pixels is the multiple of four pixels in the case of the four nozzle rows and the number of pixels is the multiple of five pixels in the case of five rows. Meanwhile, the number of pixels of the threshold value matrix in the Y direction is not particularly limited as long as an area is ensured in which the threshold values of 1 to 255 are distributed enough that the texture does not appear in the area. Hereinafter, a modified example will be described which employs a threshold value matrix having a larger size by using a printing head having a more complex nozzle layout.

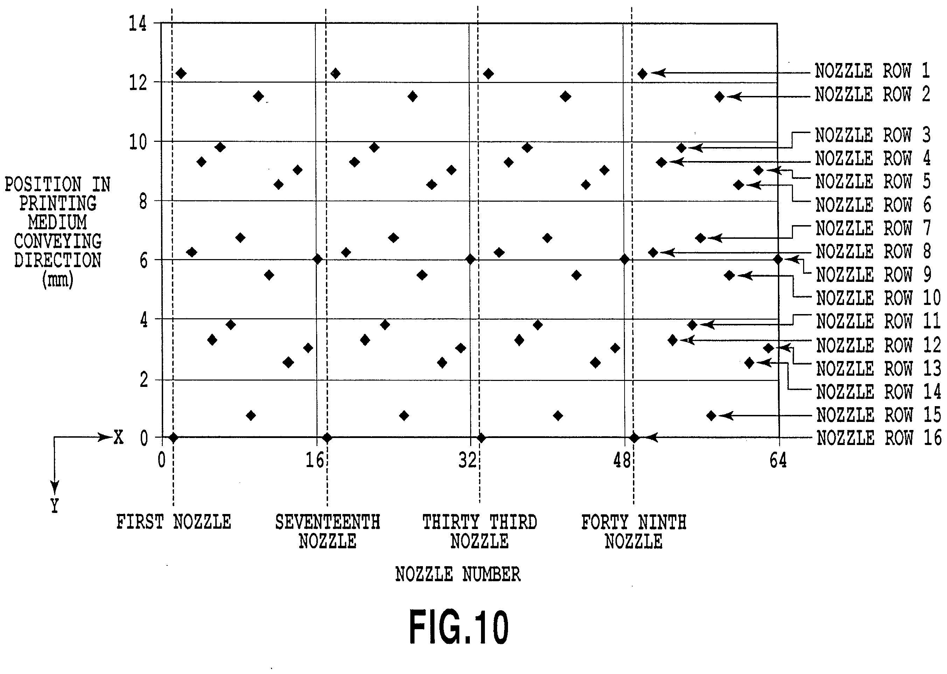

Fig. 10 is a diagram illustrating a nozzle layout of the nozzle face of the printing head used in the modified example. Here, the nozzle layout is depicted for sixty four nozzles in the coordinate of the XY plane. Sixteen nozzle rows (the nozzle rows 1 to 16) are arranged in the printing head used in the embodiment and the nozzles ejecting inks at the same timing are arranged with a period of sixteen pixels in the X direction in each nozzle row.

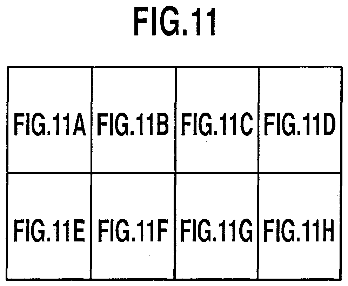

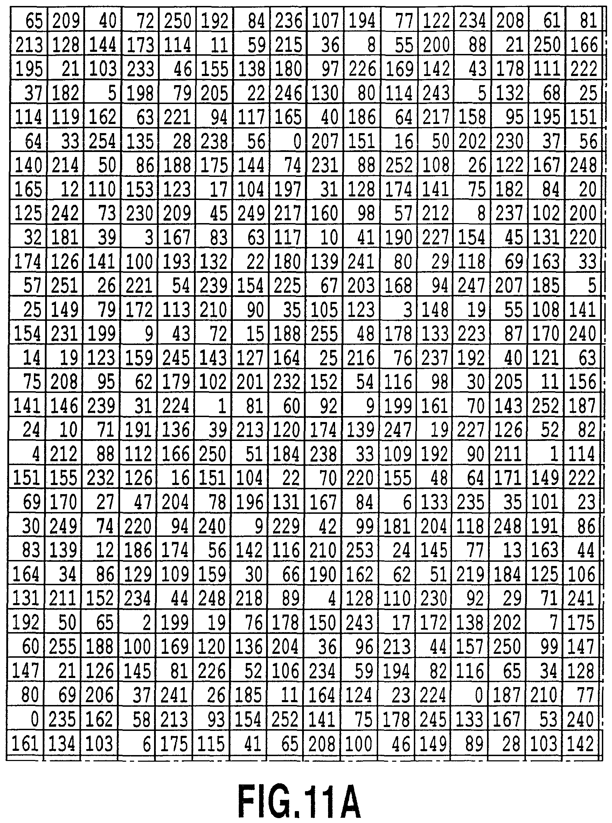

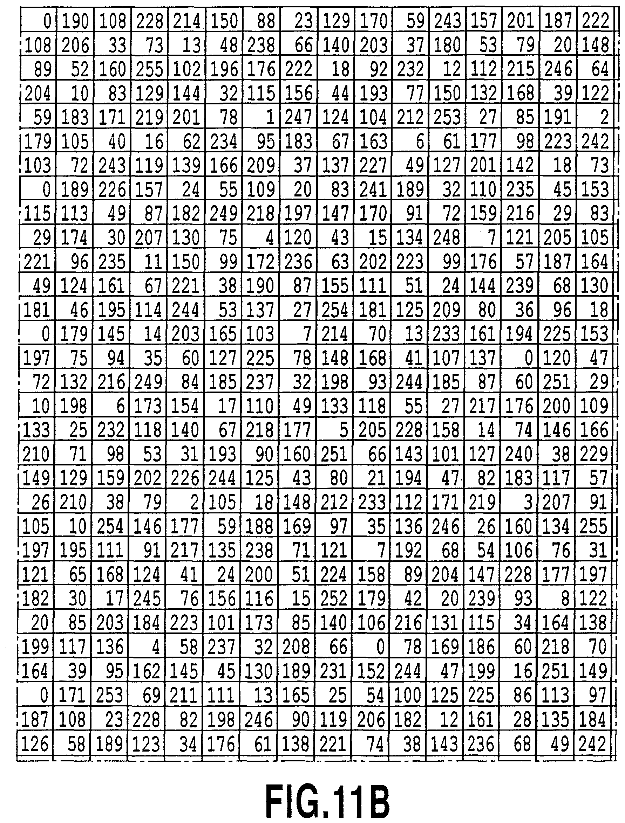

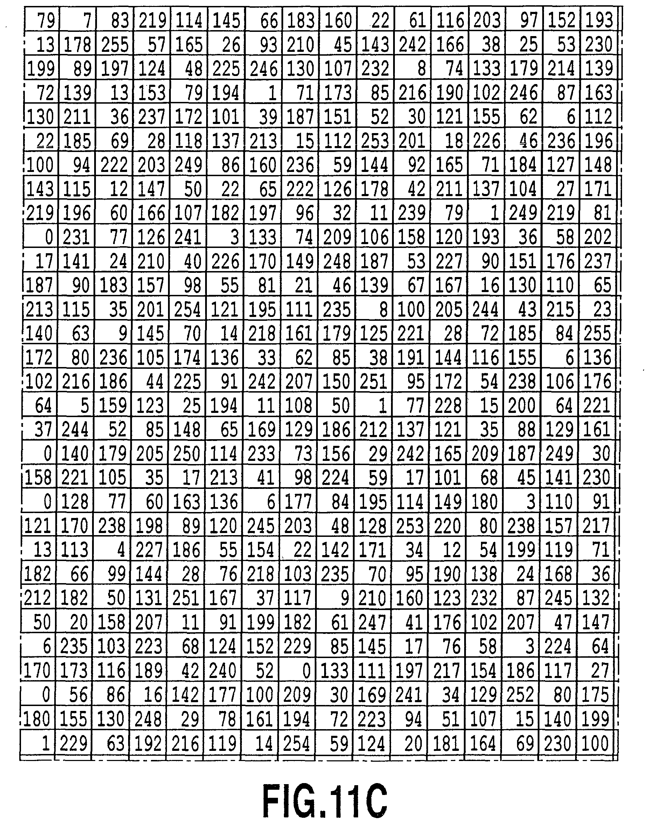

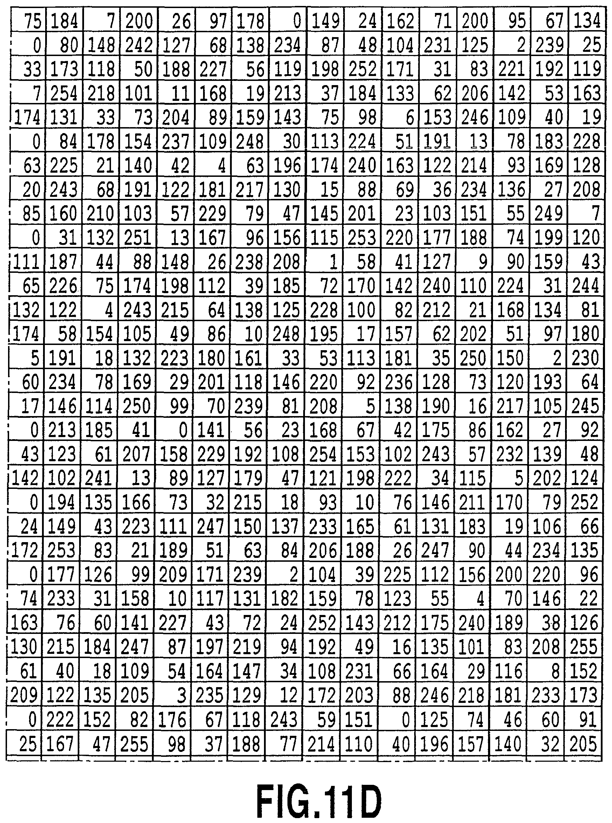

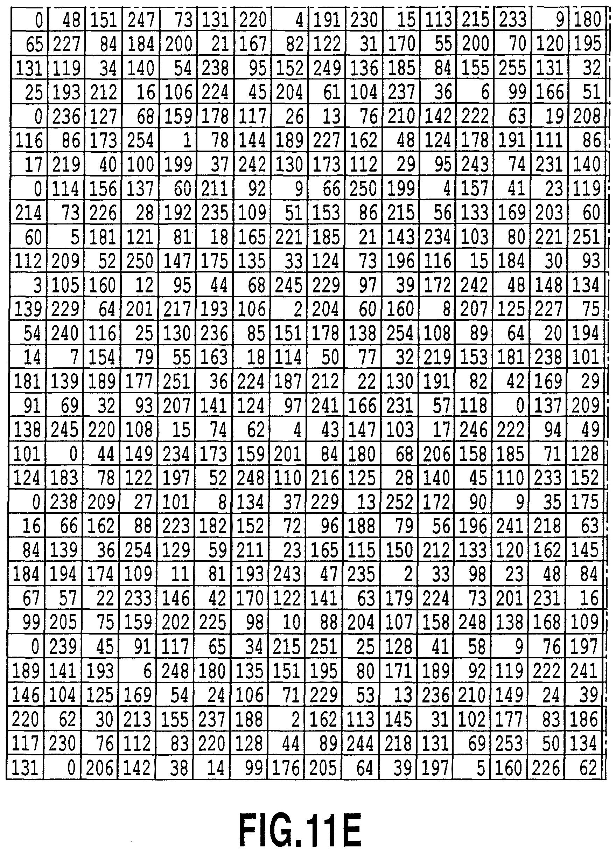

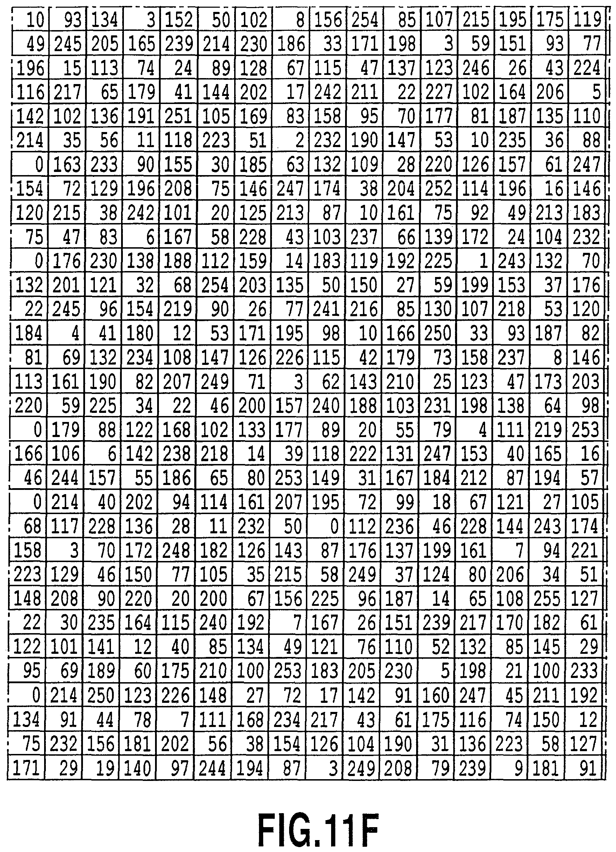

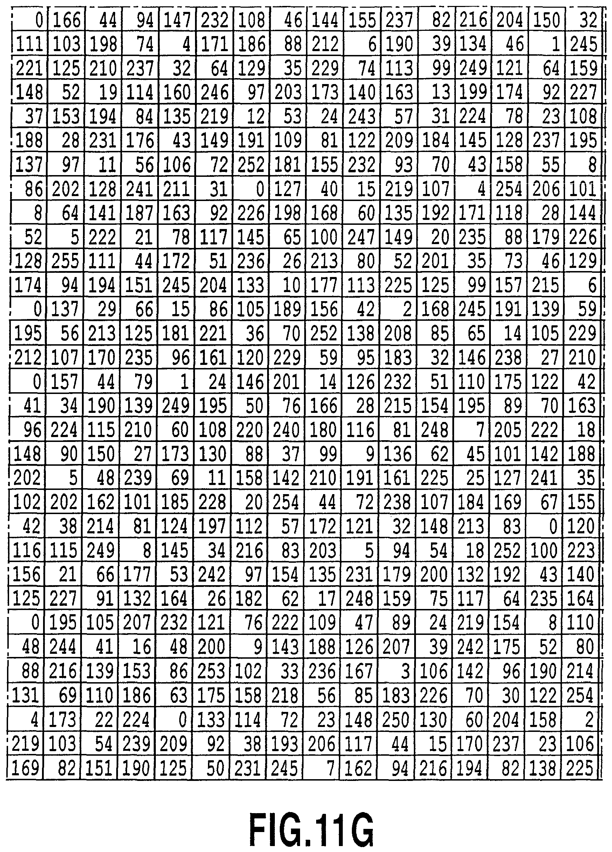

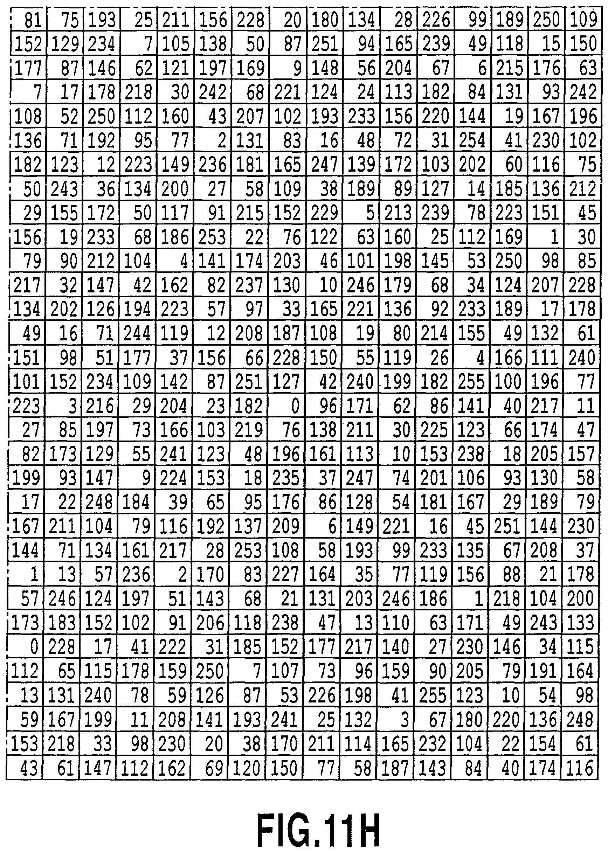

Fig. 11 is a diagram showing the relationship of Figs. 11A to 11H and Figs. 11A to 11H are example of a threshold value matrix having an area of sixty four pixels by sixty four pixels and corresponding to the nozzle layout illustrated in Fig. 10. In the area of sixty four pixels by sixty four pixels, the threshold values of 1 to 255 are arranged with a high dispersion property basically having a blue noise characteristic. Here, as in the above-described threshold value matrix, in the threshold value matrix, the average value of the threshold value of the nozzle row 16 easily causing a white streak is suppressed to be smaller than the average of the threshold values of the other areas.

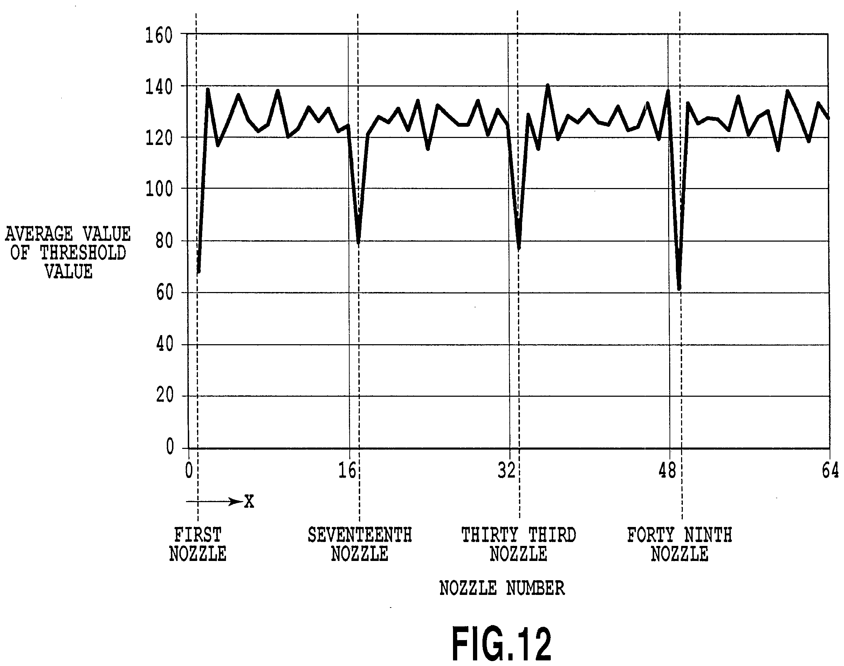

Fig. 12 is a diagram illustrating an average value in the Y direction of the threshold values corresponding to the nozzles arranged in the X direction in the threshold value matrix illustrated in Figs. 11A to 11H. Among sixty four nozzles, the average values of the first, seventeenth, thirty third, and forty ninth nozzles included in the nozzle row 16 are different from each other but are similarly suppressed to be smaller than the average value of the other nozzles.

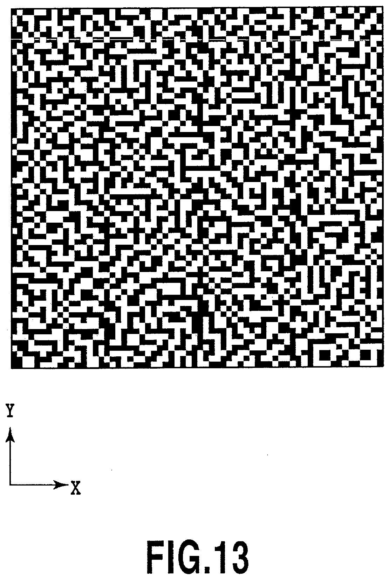

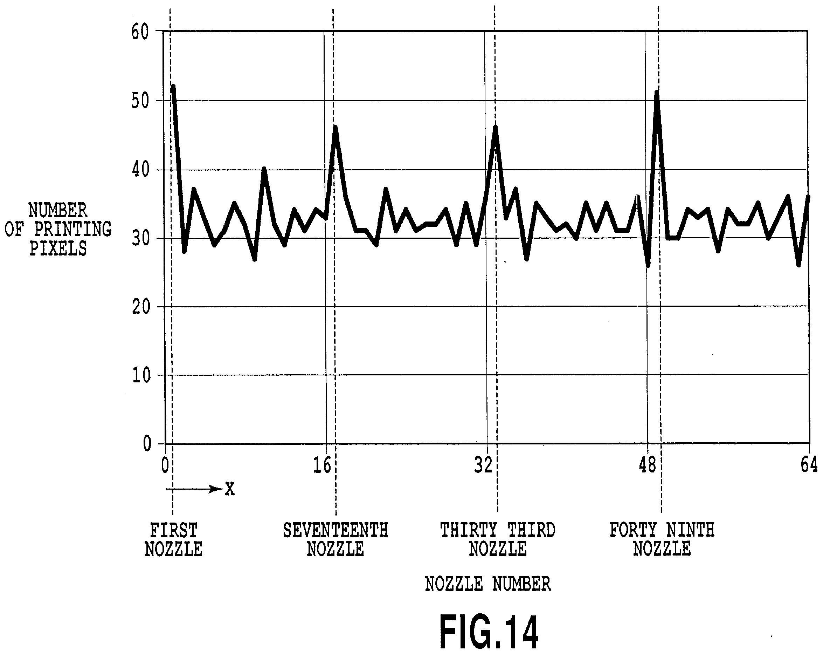

Fig. 13 is a diagram illustrating the arrangement state of printing pixels (1) when an image data having a signal value of 128 is uniformly input to a pixel area of sixty four pixels by sixty four pixels in the configuration using the threshold value matrix of Figs. 11A to 11H. Further, Fig. 14 is a diagram illustrating the number of the pixels set for the printing (1) with respect to each of the nozzles according to the result of Fig. 13. Among sixty four nozzles, the numbers of the printing pixels of the first, seventeenth, thirty third, and forty ninth nozzles included in the nozzle row 16 are larger than the number of printing pixels of the other nozzles.

According to the above-described embodiment, in the threshold value matrix referred during the dither process, the average value of the threshold value for the nozzle row ejecting inks at the latest timing among the nozzle rows of the used printing head is set to be smaller than the average value of the other nozzle rows. Accordingly, it is possible to set the number of times of ejecting inks from the nozzle row that performs the ejection operation at the latest timing to be larger than that from the other nozzle rows and thus to suppress density unevenness along with a white streak.

### (Second Embodiment)

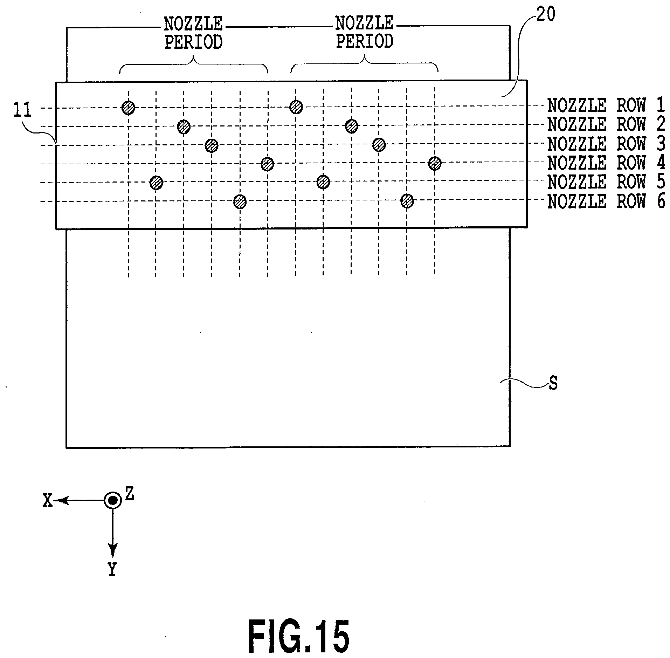

Fig. 15 is a diagram illustrating a nozzle layout in a nozzle face of a printing head used in the second embodiment. Here, a layout is formed such that six nozzle rows (the nozzle rows 1 to 6) are distributed in the X direction and a plurality of nozzles included in each nozzle row are arranged at the period of six pixels in the X direction.

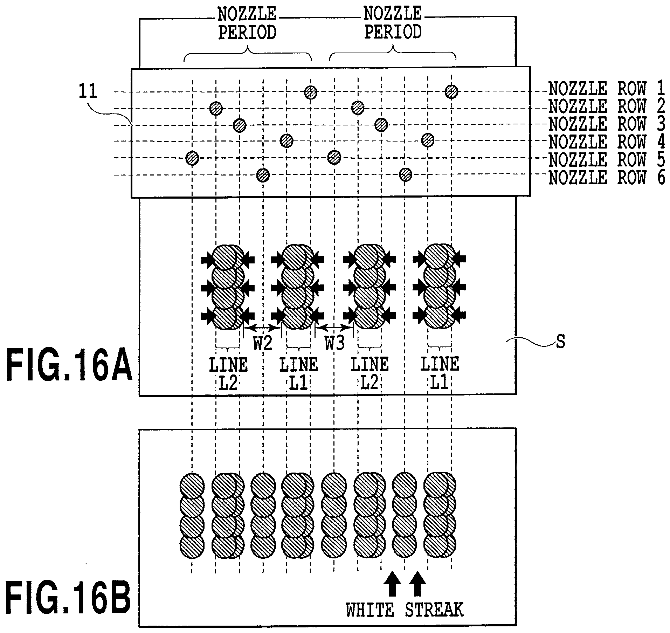

Figs. 16A and 16B are diagrams illustrating a density unevenness generation state when an image is printed on a printing medium having low ink absorbability by the printing head of Fig. 15 according to a single pass printing system.

Fig. 16A illustrates a state where an ejection operation has been performed from the nozzle row 1 to the nozzle row 4. In this step, dots are printed at the adjacent positions in the X direction by the nozzle row 1 and the nozzle row 4 and are attracted to one another. Further, dots are printed at the adjacent positions in the X direction by the nozzle row 2 and the nozzle row 3 and are attracted to one another. As a result, a line L1 and a line L2 are formed by the combination of two pairs of ruled lines. A white paper area W2 and a white paper area 3 are exposed between the line L1 and the line L2. The white paper area W2 and W3 have a large width compared with the case where the dots are not attracted to one another, that is, an image is printed on a printing medium having high ink absorbability.

Meanwhile, Fig. 16B illustrates a state where an ejection operation has been performed by the nozzle row 5 and the nozzle row 6 from the state of Fig. 16A. As described above with reference to Fig. 16A, the relatively large white paper areas W2 and W3 are formed between the line L1 and the line L2 formed by the nozzle row 1 to the nozzle row 4. Then, the ink droplets ejected from the nozzle row 5 and the nozzle row 6 are landed on the substantial centers of the white paper areas W2 and W3 respectively. For this reason, the ruled lines printed at the adjacent positions and the ruled lines printed separately therefrom are periodically arranged in the X direction and a white streak is regularly generated in the image. As a result, density unevenness is detected.

In the first embodiment, the threshold value only for the nozzle row 3 having the latest ejection timing among the nozzle rows 1 to 3 is set to be smaller than those of the other areas. On the contrary, in the second embodiment, the threshold values for the nozzle row 6 with the latest ejection timing and the nozzle row 5 with the next latest ejection timing, that is, for two nozzle rows forming dots in the white paper areas W2 and W3 are set to be smaller than those of the other areas.

At this time, the average value of the threshold value corresponding to the nozzle row 5 may be equal to or different from the average value of the threshold value corresponding to the nozzle row 6. The average value of the threshold value for the nozzle row 6 ejecting an ink at the latest timing may be set to be further smaller than the average value of the threshold value for the nozzle row 5.

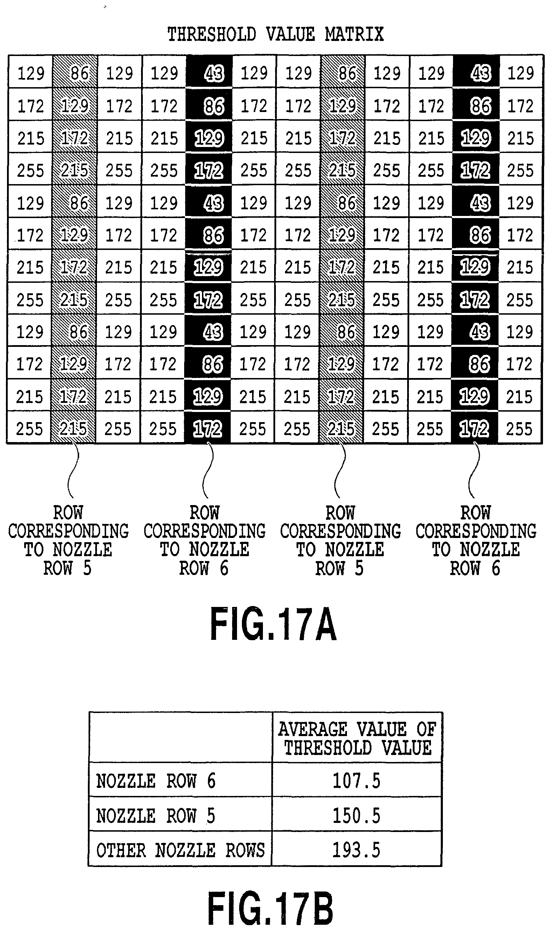

Figs. 17A and 17B are diagrams illustrating a threshold value matrix which can be employed in the present embodiment and an average value of the threshold value in the matrix in the Y direction. In order to handle a nozzle layout having a period of six pixels in the X direction, a threshold value matrix having an area of twelve pixels by twelve pixels is exemplified. In the example, as illustrated in Fig. 17B, the average value of the threshold value corresponding to the nozzle row 6 is 107.5, the average value of the threshold value corresponding to the nozzle row 5 is 150.3, and the average value of the threshold value corresponding to the other areas is 193.5.

According to the present embodiment, it is possible to increase the number of the ink droplets ejected by the nozzle row 5 and the nozzle row 6 while suppressing the contact and the movement of the ink droplets printed on the printing medium by the nozzle row 1 to the nozzle row 4. As a result, it is possible to suppress a white streak from being generated at the positions of the nozzle row 5 and the nozzle row 6 and thus to suppress density unevenness.

### (Third Embodiment)

In the third embodiment, each of the printing heads 11 to 14 can selectively print any one of a large dot and a small dot. Further, also in the embodiment, the same processes as those of the first embodiment are performed up to the γ correction process J0004 and a dither process is employed as the binarization process J0005 to have a characteristic in a threshold value matrix.

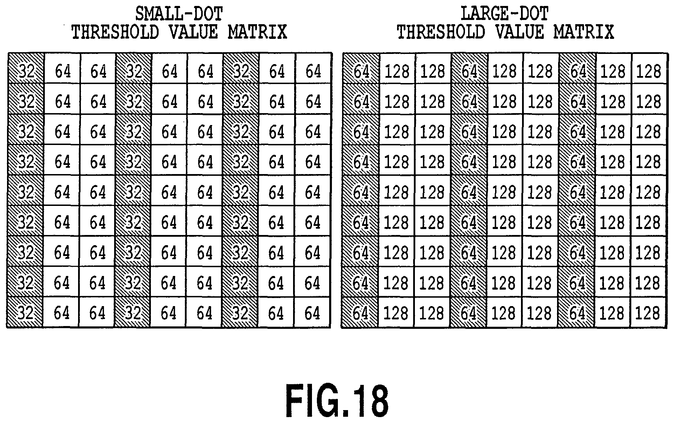

Fig. 18 is a diagram illustrating a large-dot threshold value matrix and a small-dot threshold value matrix used as the threshold value matrix of the present embodiment. A threshold value relatively higher than that of the small-dot threshold value matrix is set in the large-dot threshold value matrix. In any threshold value matrix, the average value of the threshold value set for the pixel area depicted in gray becomes smaller than the average value of the threshold value set for the other pixel areas.

In the quantization process J0005 of the embodiment, the multi-value data subjected to the γ correction process J0004 is compared with the threshold value set in the large-dot threshold value matrix to determine the printing (1) or the non-printing (0) of the large dot. At the same time, the multi-value data is compared with the threshold value set in the small-dot threshold value matrix to determine the printing (1) and the non-printing (0) of the small dot. Subsequently, these two kinds of binarization results are checked and, regarding the pixel that is set to the printing (1) for both of the large dot and the small dot and the pixel that is set to the printing (1) for only the large dot, a large dot ejection data is output. Regarding the pixel that is set to the printing (1) for only the small dot, a small dot ejection data is output. Further, regarding the pixel that is set to the non-printing (0) for both of the large dot and the small dot, a non-ejection data is output.

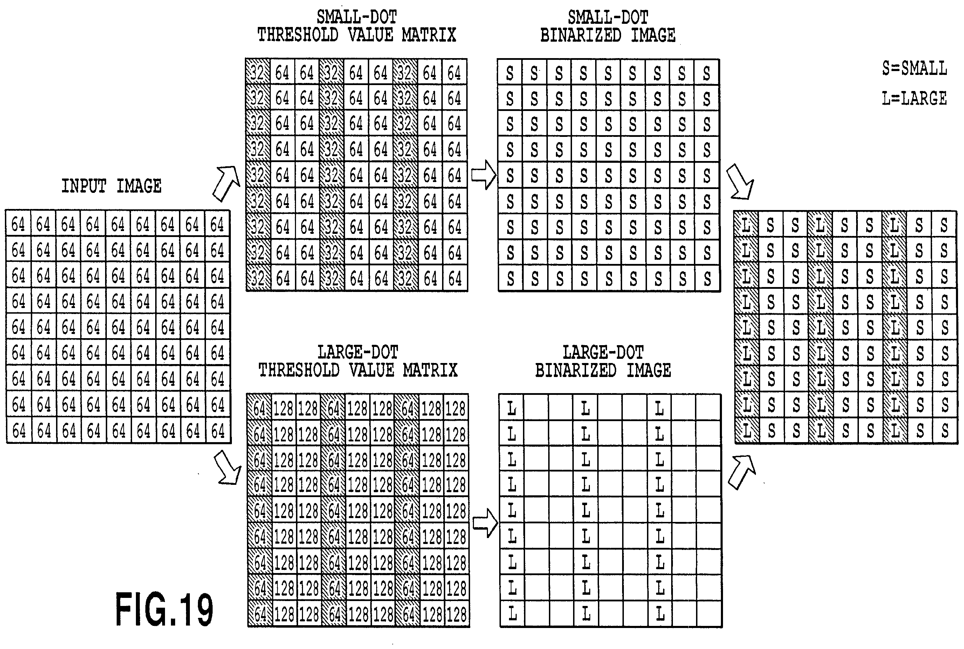

Fig. 19 is a diagram illustrating a printing pixel arrangement state of the large dot (L) and the small dot (S) when an image data having a signal value of 64 is uniformly input to the configuration in which the binarization process is performed by using the large-dot threshold value matrix and the small-dot threshold value matrix illustrated in Fig. 18. In a comparison step with any threshold value matrix, the printing (1) is determined in the pixel of which the threshold value equal to or smaller than 64 is set and the non-printing (0) is determined in the pixel of which the threshold value larger than 64 is set. Then, a final quantization result is obtained by the combination of two binarization results. As understood from Fig. 19, in the printing pixel corresponding to the nozzle row 3, the large dot is easily printed compared with the printing pixel corresponding to the nozzle row 1 or the nozzle row 2. For this reason, it is possible to increase a large dot printing ratio at a position corresponding to the nozzle row 3 easily causing a white streak on the printing medium compared with the other areas and thus to suppress density unevenness.

Further, in order to simplify the description in Fig. 18, the threshold value matrix which has an area of nine pixels by nine pixels and in which three levels of threshold values (32, 64, and 128) are continuously set in the Y direction has been exemplified. However, it is desirable that the actual threshold value matrix has a larger image area in which the threshold values of 1 to 255 are distributed. At this time, a threshold value relatively higher than that of the small-dot threshold value matrix may be set in the large-dot threshold value matrix. Meanwhile, in any threshold value matrix, a threshold value may be set in the pixel area of the nozzle row 3 so that the average value becomes smaller than those of the other pixel areas. In this way, it is possible to adjust the number of dots and the dot size in an area corresponding to the nozzle row 3 in order to suppress a white streak.

Further, in the description above, the dot size can be changed in two levels of the large dot and the small dot, but the effect of the embodiment is not limited to such a configuration. The present embodiment is effective, as long as, in the large-dot threshold value matrix, a threshold value relatively higher than that of the small-dot threshold value matrix is set and, in both of threshold value matrix, threshold values are set in the pixel areas of the nozzle row 3 so that the average value is smaller than those of the other pixel areas.

### (Fourth Embodiment)

Also in the fourth embodiment, the number of times of ejecting inks from the nozzle row 3 is set to be larger than that of the other nozzles by the characteristic of the binarization process J0005 illustrated in Fig. 4. However, in the present embodiment, an error diffusion process is employed as the binarization process J0005 instead of a dither process.

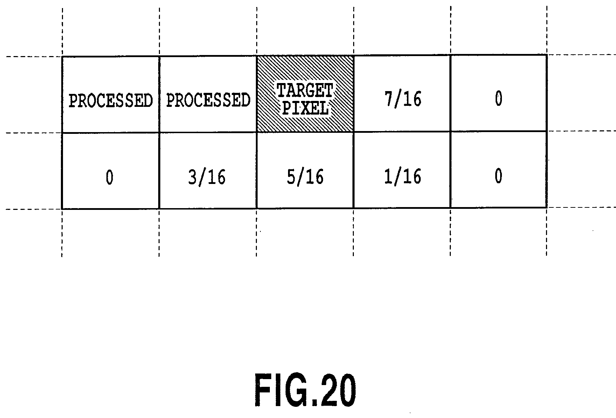

In the error diffusion process, a multi-value error generated when a target pixel is binarized is distributed to the peripheral pixels not subjected to the binarization process. At this time, the distribution amount to each pixel is calculated by using, for example, a distribution coefficient illustrated in Fig. 20. In the embodiment, the number of times of ejecting inks from the nozzle row at the position easily causing a white streak is set to be larger than that of the other nozzle rows due to the characteristic of the distribution coefficient.

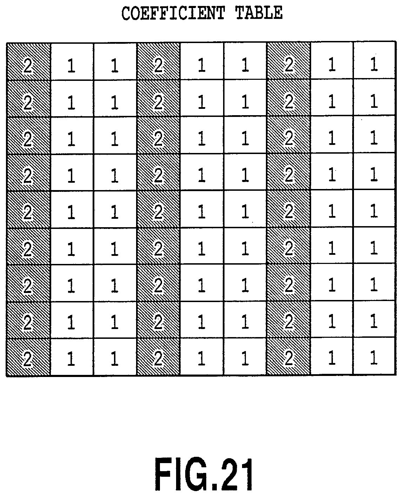

Fig. 21 is a coefficient table used in the present embodiment. The coefficients are correlated with pixels. Here, an area of nine pixels in the X direction and nine pixels in the Y direction is illustrated for the description. In Fig. 21, the pixel area corresponding to the nozzle row 3 with the latest ink ejection timing for the printing medium is depicted in gray. In the present embodiment, a coefficient (2) set in the pixel area depicted in gray is set to be larger than a coefficient (1) set in the other pixel areas.

When an actual error diffusion process is performed, the CPU 108 calculates an error amount to be added to an interested pixel by multiplying the distribution coefficient illustrated in Fig. 20, the coefficient illustrated in the coefficient table of Fig. 21 and the error generated in a process of a target pixel. When such a process is performed, an error about twice of that of the other areas is added to the pixel area depicted in gray. As for the value of the multi-value data in the actual binarization process, the signal value of the pixel area depicted in gray can be set to be larger than the signal values of the other areas. As a result, since the number of dots printed in the pixel area easily causing a white streak is set to be larger than that of the other areas, density unevenness in the entire area can be reduced.

### (Fifth Embodiment)

In the fifth embodiment, the number of ejecting inks of the nozzle row at a position easily causing a white streak is set to be larger than that of the other nozzle rows by an additional correction process instead of the binarization process.

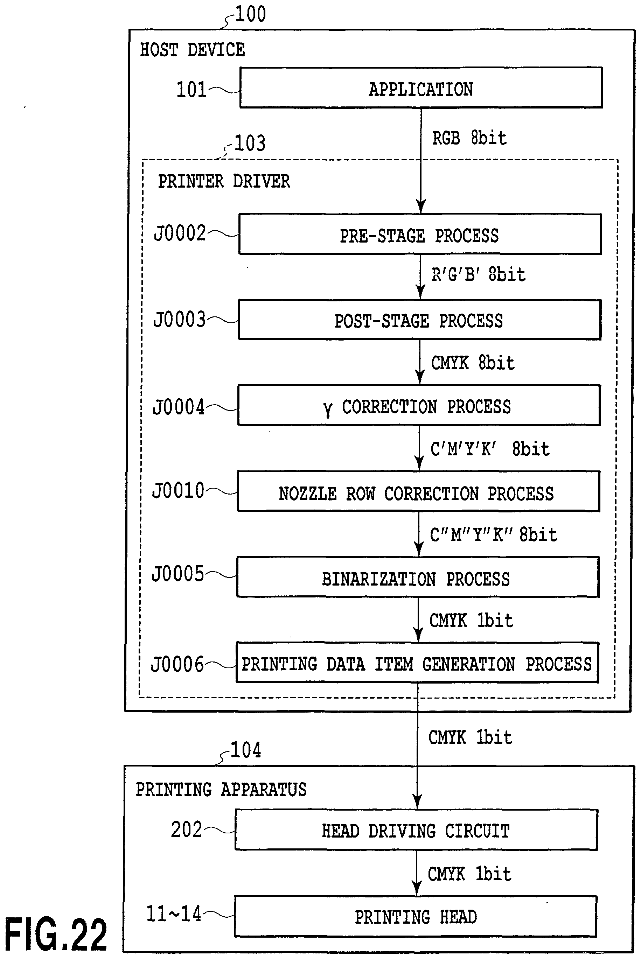

Fig. 22 is a block diagram illustrating an image process step performed by each of the host device 100 and the printing apparatus 104 in the present embodiment. This block diagram is different from the block diagram of Fig. 4 in that a nozzle row correction process J0010 is added between the γ correction process J0004 and the binarization process J0005. In the nozzle row correction process J0010, the multi-value (8-bit) C'M'Y'K' data input by the γ correction process J0004 is multiplied by a predetermined correction coefficient to acquire a new multi-value (8-bit) C"M"Y"K" data.

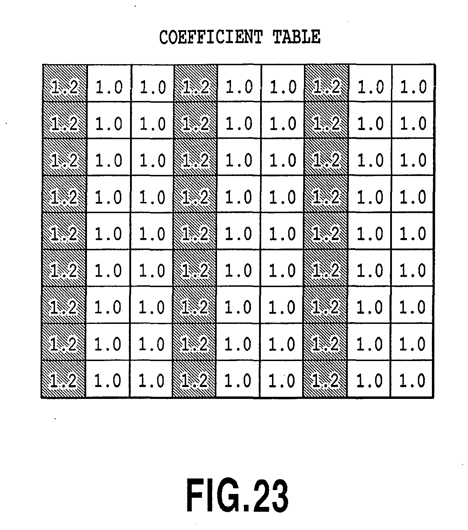

Fig. 23 is a coefficient table used in the embodiment. The coefficient table is correlated with the pixels. Here, an area of nine pixels in the X direction and nine pixels in the Y direction is illustrated for the description. In Fig. 23, the pixel area corresponding to the nozzle row 3 with the latest ink ejection timing for the printing medium is depicted in gray. In the embodiment, the coefficient of the pixel area depicted in gray is set to 1.2 and the coefficients of the other pixel areas are set to 1.0. The CPU 108 multiples the multi-value data (C'M'Y'K') input to the pixel depicted in gray by 1.2 and outputs the result as a corrected multi-value data (C"M"Y"K"). Meanwhile, the CPU 108 multiples the multi-value data (C'M'Y'K') input to the pixel depicted in white by 1.0 (that is, a through state) and outputs the result as a corrected multi-value data (C"M"Y"K"). Then, in the subsequent binarization process J0005, a general dither process or a general error diffusion process is performed instead of the particular process described in the above-described embodiments.

According to the present embodiment, the signal value of the multi-value data in the pixel area depicted in gray can be set to about 1.2 times the signal values of the other areas. As a result, since the number of dots printed in the pixel area easily causing a white streak is set to be larger than that of the other areas, density unevenness in the entire area can be reduced.

### (Sixth Embodiment)

In the embodiment, the printing head described in the first embodiment and illustrated in Fig. 10 is used. In the embodiment, as in the first embodiment, the number of times of ejecting inks from the nozzle row 16 with the latest ejection timing is increased. In addition, the printing position is adjusted such that the non-printing pixels not printing dots by the nozzle row 16 are continued in the Y direction as many as possible. Specifically, in the threshold value matrix, the threshold values are arranged so that large-value threshold values are continued in the Y direction as many as possible for the pixels corresponding to the nozzle row 16. That is, the number of the continuous pixels in the Y direction among the pixels corresponding to the nozzles (the first nozzles) within the nozzle row 16 and each having a threshold value larger than a relatively large value (the first value) becomes larger than the number of the continuous pixels in the Y direction among the pixels corresponding to the nozzles (the second nozzles) other than the nozzle row 16 and each having a threshold value larger than the first value.

In this way, the number of continuously non-ejecting inks from the nozzles of the nozzle row 16 becomes larger than the number of not continuously non-ejecting inks from the nozzles of the other nozzle rows. That is, the frequency in which the ink droplets ejected from the nozzle row 16 are adjacent to each other in the Y direction on the printing medium is suppressed and thus the isolation in the Y direction is easily made. Then, when non-absorbed ink droplets exist at both side of such an ink droplet in the X direction, the non-absorbed ink is attracted to the adjacent ink and thus is easily widened in the X direction. As a result, it is possible to reduce a white streak by preventing the white streak from extending in the Y direction.

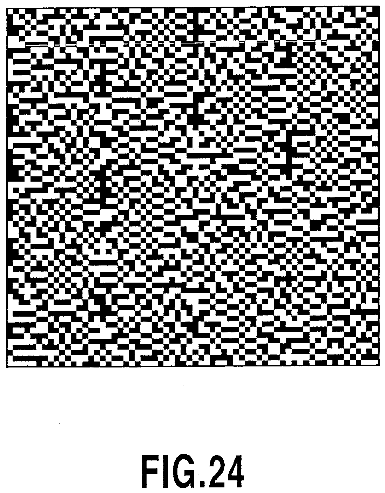

Fig. 24 is a diagram illustrating the arrangement state of printing pixels (1) when an image data having a signal value of 128 is uniformly input to a pixel area of sixty four pixels by sixty four pixels in the configuration of the present embodiment. The numbers of the printing pixels corresponding to the nozzle rows 2 to 16 are thirty two respectively and the number of the printing pixels corresponding to the nozzle row 16 is thirty six. Additionally, the ratio of the continuous non-printing pixels in the Y direction at the nozzle row 16 is larger than that of the other nozzle rows. According to such an embodiment, it is possible to further suppress a white streak compared with the first embodiment.

Further, in the description above, embodiments have been described in which an image process illustrated in Fig. 4 is performed by a system including the host device 100 and the printing apparatus 104 as illustrated in Fig. 3. In this case, the host device 100 serves as an image processing apparatus of the invention. However, the invention is not limited to the embodiment.

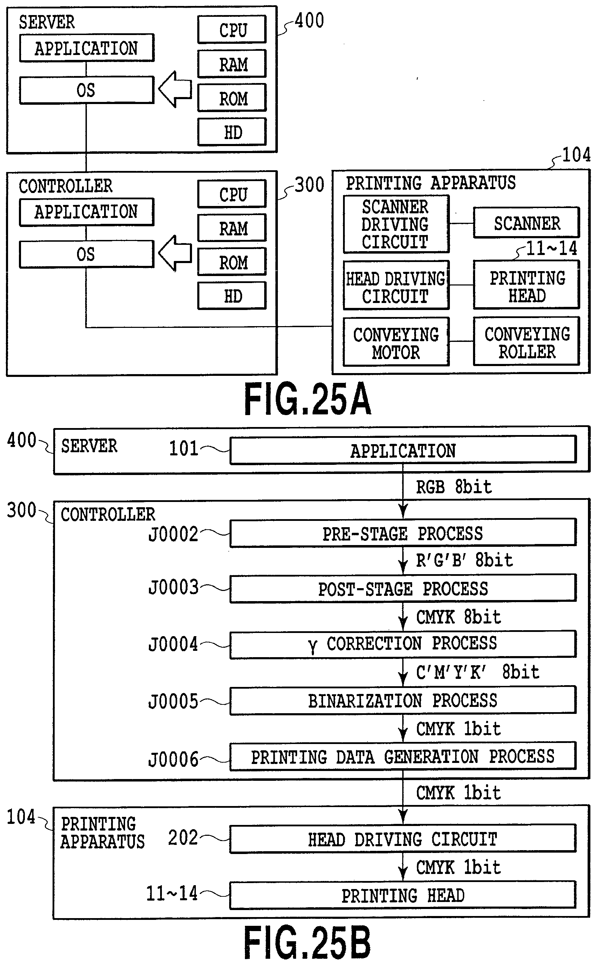

Figs. 25A and 25B are block diagrams illustrating another process step and another system configuration diagram which can be applied to the invention. Here, a controller 300 performs a characteristic process of the present invention on an image data generated by an application of a server 400 and transmits the ejection data generated herein to the printing apparatus 104. In this case, the controller 300 serves as an image processing apparatus of the invention. In the configurations illustrated in Figs. 25A and 25B, since a process having a relatively large load including a characteristic process of the present invention can be independently performed by the controller 300, a large number of the image datas can be processed at a high speed.

Further, in the description above, as described above in Fig. 1, a full-line type inkjet printing apparatus which prints an image by conveying the printing medium S with respect to the printing heads 11 to 14 fixed into the apparatus has been exemplified, but the invention is not limited to such an embodiment. Even in a serial type inkjet printing apparatus which prints an image while intermittently repeating the relative movement of the printing head with respect to the printing medium and the printing medium conveying operation, the invention can be effectively used as long as a so-called single pass printing system is employed.

Further, in the description above in Figs. 5A to 5C, the lines L are formed by the inks ejected in advance from the plurality of nozzles rows (the nozzle row 1 and the nozzle row 2) and the white streak is attracted. That is, the above-described embodiment has been described on the assumption that three or more nozzle rows are provided. However, the invention is not limited to such an embodiment. The density unevenness with that the present invention deals is generated when a white paper area on which the subsequent inks will be printed becomes larger than a designed value due to the attraction of the precedently printed inks. That is, the invention is also effective in a configuration as long as in which two nozzle rows, one of which ejects inks in advance and the other of which eject inks subsequently, exist.

The invention can be also realized by a process in which a program realizing one or more functions of the above-described embodiments is supplied to a system or an apparatus via a network or a storage medium and one or more processors in the system or the apparatus read and execute the program. Further, the invention can be also realized by a circuit (for example, ASIC) realizing one or more functions.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus (100) generating ejection data for ejecting a predetermined color of inks onto a printing medium (S) by using a printing head (11), the printing head having a first nozzle row in which nozzles (12) for ejecting a predetermined color of inks are arranged in a predetermined direction and a second nozzle row in which nozzles (12) for ejecting the predetermined color of inks are arranged in the predetermined direction, the first nozzle row and the second nozzle row being arranged in an intersection direction intersecting the predetermined direction: the ejecting onto the printing medium (S) being performed in order from the second nozzle row and the first nozzle row while relatively moving the printing medium (S) with respect to the printing head (11) in the intersection direction, the image processing apparatus comprising:
a generation means (108) configured to generate the ejection data so that, in a case where an image data having the same value is input to pixels corresponding to first nozzles included in the first nozzle row and pixels corresponding to second nozzles included in the second nozzle row, the number of pixels to which the predetermined color of inks are ejected from the first nozzles is larger than the number of pixels to which the predetermined color of inks are ejected from the second nozzles.

2. The image processing apparatus according to claim 1,
wherein the generation means refers to a threshold value matrix in which a threshold value is set for each of a plurality of pixels to generate the ejection data so that an ejecting of ink is determined to a pixel in which a value indicated by the image data is larger than the threshold value set in the threshold value matrix and a non-ejecting of ink is determined to a pixel in which the value indicated by the image data is smaller than the threshold value set in the threshold value matrix, and
wherein the threshold value for each pixel is set in the threshold value matrix so that an average value of the threshold values of a plurality of pixels corresponding to the first nozzles is smaller than an average value of the threshold values of a plurality of pixels corresponding to the second nozzles.

3. The image processing apparatus according to claim 2,
wherein the threshold value for each pixel is set in the threshold value matrix so that (i) the number of the pixels corresponding to the first nozzles and each having a threshold value smaller than a first value is substantially equal to the number of pixels corresponding to the second nozzles and each having a threshold value smaller than the first value and (ii) the number of pixels corresponding to the first nozzles and each having a threshold value larger than the first value and smaller than a second value is larger than the number of pixels corresponding to the second nozzles and each having a threshold value larger than the first value and smaller than the second value.

4. The image processing apparatus according to claim 2,
wherein the threshold value for each pixel is set in the threshold value matrix so that the number of continuous pixels in the intersection direction among the pixels corresponding to the first nozzles and each having a threshold value larger than a first value is larger than the number of continuous pixels in the intersection direction among the pixels corresponding to the second nozzles and each having a threshold value larger than the first value.

5. The image processing apparatus according to any one of claims 2 to 4,
wherein the threshold value is set in the threshold value matrix so that a dot arrangement formed by a printing operation performed on the printing medium in accordance with the ejection data has a blue noise characteristic.

6. The image processing apparatus according to any one of claims 1 to 5,
wherein the first nozzle row is arranged at a downstream side in a printing medium movement direction in relation to the second nozzle row.

7. The image processing apparatus according to any one of claims 1 to 6,
wherein the printing head further has a third nozzle row in which nozzles for ejecting the predetermined color of inks are arranged in the predetermined direction,
wherein the third nozzle row is arranged at an upstream side in the movement direction in relation to the first nozzle row and is arranged at a downstream side in the movement direction in relation to the second nozzle row, and
wherein the generation means generates the ejection data so that, in a case where an image data having the same value is input to the pixels corresponding to the first nozzles, the pixels corresponding to the second nozzles, and the pixels corresponding to third nozzles included in the third nozzle row, the number of pixels to which the predetermined color of inks are ejected from the third nozzles is smaller than the number of pixels to which the predetermined color of inks are ejected from the first nozzles and is larger than the number of pixels to which the predetermined color of inks are ejected from the second nozzles.

8. The image processing apparatus according to claim 1,
wherein the generation means generates a first ejection data and a second ejection data by performing a binarization process while distributing an error generated in a target pixel during the binarization process to peripheral pixels not subjected to the binarization process in accordance with a predetermined coefficient, and
wherein the predetermined coefficient is correlated with each pixel so that more errors are distributed to the pixels corresponding to the first nozzles compared with the pixels corresponding to the second nozzles.

9. The image processing apparatus according to claim 1,
wherein the generation means calculates a corrected multi-value data corresponding to the first nozzle row and a corrected multi-value data corresponding to the second nozzle row by multiplying the multi-value data corresponding to the first nozzle row by a correction coefficient larger than the multi-value data corresponding to the second nozzle row and generates a first ejection data and a second ejection data by binarizing the corrected multi-value data corresponding to the first nozzle row and the corrected multi-value data corresponding to the second nozzle row respectively.

10. The image processing apparatus according to any one of claims 1 to 9, further comprising:
a printing means configured to print an image by ejecting an ink from the printing head in accordance with the ejection data.

11. An image processing method generating ejection data for ejecting a predetermined color of inks onto a printing medium (S) by using a printing head (11), the printing head having a first nozzle row in which nozzles (12) for ejecting a predetermined color of inks are arranged in a predetermined direction and a second nozzle row in which nozzles (12) for ejecting the predetermined color of inks are arranged in the predetermined direction, the first nozzle row and the second nozzle row being arranged in an intersection direction intersecting the predetermined direction: the ejecting onto the printing medium (S) being performed in order from the second nozzle row and the first nozzle row while relatively moving the printing medium (S) with respect to the printing head (11) in the intersection direction, the image processing method comprising a step of:
generating the ejection data so that, in a case where an image data having the same value is input to pixels corresponding to first nozzles included in the first nozzle row and pixels corresponding to second nozzles included in the second nozzle row, the number of pixels to which the predetermined color of inks are ejected from the first nozzles is larger than the number of pixels to which the predetermined color of inks are ejected from the second nozzles.

12. The image processing method according to claim 11,
wherein the generation step refers to a threshold value matrix in which a threshold value is set for each of a plurality of pixels to generate the ejection data so that an ejecting of ink is determined to a pixel in which a value indicated by the image data is larger than the threshold value set in the threshold value matrix and a non-ejecting of ink is determined to a pixel in which the value indicated by the image data is smaller than the threshold value set in the threshold value matrix, and
wherein the threshold value for each pixel is set in the threshold value matrix so that an average value of the threshold values of a plurality of pixels corresponding to the first nozzles is smaller than an average value of the threshold values of a plurality of pixels corresponding to the second nozzles.

13. The image processing method according to claim 12,
wherein the threshold value for each pixel is set in the threshold value matrix so that (i) the number of the pixels corresponding to the first nozzles and each having a threshold value smaller than a first value is substantially equal to the number of pixels corresponding to the second nozzles and each having a threshold value smaller than the first value and (ii) the number of pixels corresponding to the first nozzles and each having a threshold value larger than the first value and smaller than a second value is larger than the number of pixels corresponding to the second nozzles and each having a threshold value larger than the first value and smaller than the second value.

14. The image processing method according to claim 12,
wherein the threshold value for each pixel is set in the threshold value matrix so that the number of continuous pixels in the intersection direction among the pixels corresponding to the first nozzles and each having a threshold value larger than a first value is larger than the number of continuous pixels in the intersection direction among the pixels corresponding to the second nozzles and each having a threshold value larger than the first value.

15. The image processing method according to any one of claims 12 to 14,
wherein the threshold value is set in the threshold value matrix so that a dot arrangement formed by a printing operation performed on the printing medium in accordance with the ejection data has a blue noise characteristic.

## Patentansprüche

1. Bildverarbeitungsvorrichtung (100), die Ausstoßdaten erzeugt, zum Ausstoßen einer vorbestimmten Tintenfarbe auf ein Druckmedium (S) unter Verwendung eines Druckkopfs (11), wobei der Druckkopf eine erste Düsenreihe aufweist, in der Düsen (12) zum Ausstoßen einer vorbestimmten Tintenfarbe in einer vorbestimmten Richtung angeordnet sind sowie eine zweite Düsenreihe, in der Düsen (12) zum Ausstoßen der vorbestimmten Tintenfarbe in der vorbestimmten Richtung angeordnet sind, wobei die erste Düsenreihe und die zweite Düsenreihe in einer die vorbestimmte Richtung kreuzenden Richtung angeordnet sind: wobei das Ausstoßen auf das Druckmedium (S) in Reihenfolge von der zweiten Düsenreihe und der ersten Düsenreihe durchgeführt wird, während das Druckmedium (S) hinsichtlich des Druckkopfs (11) in der kreuzenden Richtung relativ bewegt wird, wobei die Bildverarbeitungsvorrichtung umfasst:
eine Erzeugungseinrichtung (108), die konfiguriert ist zum Erzeugen der Ausstoßdaten, so dass die Pixelanzahl, für die die vorbestimmte Tintenfarbe von den ersten Düsen ausgestoßen wird, größer ist als die Pixelanzahl, für die die vorbestimmte Tintenfarbe von den zweiten Düsen ausgestoßen wird, falls Bilddaten mit demselben Wert zu Pixeln eingegeben werden, die den in der ersten Düsenreihe enthaltenen ersten Düsen entsprechen, und Pixeln, die den in der zweiten Düsenreihe enthaltenen zweiten Düsen entsprechen.

2. Bildverarbeitungsvorrichtung nach Anspruch 1, wobei sich die Erzeugungseinrichtung auf eine Schwellenwertmatrix bezieht, in der ein Schwellenwert für ein jeweiliges der mehreren Pixel eingestellt ist, um die Ausstoßdaten zu erzeugen, so dass ein Ausstoßen von Tinte für ein Pixel bestimmt ist, in dem ein durch die Bilddaten angegebener Wert größer als der in der Schwellenwertmatrix eingestellte Schwellenwert ist, und ein Nicht-Ausstoßen von Tinte für ein Pixel bestimmt ist, in dem der durch die Bilddaten angegebene Wert kleiner ist als der in der Schwellenwertmatrix eingestellte Schwellenwert, und
wobei der Schwellenwert für ein jeweiliges Pixel in der Schwellenwertmatrix derart eingestellt ist, dass ein durchschnittlicher Wert der Schwellenwerte von mehreren, den ersten Düsen entsprechenden Pixeln kleiner ist als ein durchschnittlicher Wert der Schwellenwerte von mehreren, den zweiten Düsen entsprechenden Pixeln.

3. Bildverarbeitungsvorrichtung nach Anspruch 2, wobei der Schwellenwert für ein jeweiliges Pixel in der Schwellenwertmatrix derart eingestellt ist, dass (i) die den ersten Düsen entsprechende Pixelanzahl, von denen ein jeweiliges einen Schwellenwert aufweist, der kleiner ist als ein erster Wert, im Wesentlichen gleich der den zweiten Düsen entsprechenden Pixelanzahl ist, von denen ein jeweiliges einen Schwellenwert aufweist, der kleiner ist als der erste Wert und (ii) die den ersten Düsen entsprechende Pixelanzahl, von denen ein jeweiliges einen Schwellenwert aufweist, der größer ist als der erste Wert und kleiner ist als der zweite Wert, größer ist als die den zweiten Düsen entsprechende Pixelanzahl, von denen ein jeweiliges einen Schwellenwert aufweist, der größer ist als der erste Wert und kleiner ist als der zweite Wert.

4. Bildverarbeitungsvorrichtung nach Anspruch 2, wobei der Schwellenwert für ein jeweiliges Pixel in der Schwellenwertmatrix derart eingestellt ist, dass die Anzahl der fortlaufenden Pixel in der kreuzenden Richtung unter den den ersten Düsen entsprechenden Pixeln von denen ein jeweiliges einen Schwellenwert aufweist, der größer ist als ein erster Wert, größer ist als die Anzahl der fortlaufenden Pixel in der kreuzenden Richtung unter den den zweiten Düsen entsprechenden Pixeln von denen ein jeweiliges einen Schwellenwert aufweist, der größer ist als der erste Wert.

5. Bildverarbeitungsvorrichtung nach einem der Ansprüche 2 bis 4, wobei der Schwellenwert in der Schwellenwertmatrix derart eingestellt ist, dass eine durch einen am Druckmedium gemäß den Ausstoßdaten durchgeführten Druckvorgang gebildete Punktanordnung eine Charakteristik blauen Rauschens aufweist.

6. Bildverarbeitungsvorrichtung nach einem der Ansprüche 1 bis 5, wobei die erste Düsenreihe an einer stromabwärtigen Seite in einer Druckmediumbewegungsrichtung in Relation zur zweiten Düsenreihe angeordnet ist.

7. Bildverarbeitungsvorrichtung nach einem der Ansprüche 1 bis 6, wobei der Druckkopf ferner eine dritte Düsenreihe aufweist, in der Düsen zum Ausstoßen der vorbestimmten Tintenfarbe in der vorbestimmten Richtung angeordnet sind,
wobei die dritte Düsenreihe an einer stromaufwärtigen Seite in der Bewegungsrichtung in Relation zur ersten Düsenreihe angeordnet ist, und an einer stromabwärtigen Seite in der Bewegungsrichtung in Relation zur zweiten Düsenreihe angeordnet ist, und
wobei die Erzeugungseinrichtung die Ausstoßdaten derart erzeugt, dass die Pixelanzahl, für die die vorbestimmte Tintenfarbe von den dritten Düsen ausgestoßen wird, kleiner ist als die Pixelanzahl, für die die vorbestimmte Tintenfarbe von den ersten Düsen ausgestoßen wird, und größer ist als die Pixelanzahl, für die die vorbestimmte Tintenfarbe von den zweiten Düsen ausgestoßen wird, falls Bilddaten mit demselben Wert zu Pixeln eingegeben werden, die den ersten Düsen entsprechen, Pixeln, die den zweiten Düsen entsprechen und Pixeln, die den in der dritten Düsenreihe enthaltenen dritten Düsen entsprechen.

8. Bildverarbeitungsvorrichtung nach Anspruch 1, wobei die Erzeugungseinrichtung erste Ausstoßdaten und zweite Ausstoßdaten erzeugt, durch Durchführen eines Binärisierungsvorgangs, während ein während des Binärisierungsvorgangs erzeugter Fehler in einem Zielpixel zu periphären Pixeln verteilt wird, die nicht dem Binärisierungsvorgang unterzogen wurden, gemäß einem vorbestimmten Koeffizienten, und
wobei der vorbestimmte Koeffizient mit einem jeweiligen Pixel korreliert, so dass mehr Fehler zu den den ersten Düsen entsprechenden Pixeln verteilt werden im Vergleich zu den den zweiten Düsen entsprechenden Pixeln.

9. Bildverarbeitungsvorrichtung nach Anspruch 1, wobei die Erzeugungseinrichtung korrigierte Mehrwertdaten entsprechend der ersten Düsenreihe und korrigierte Mehrwertdaten entsprechend der zweiten Düsenreihe berechnet, durch Multiplizieren der der ersten Düsenreihe entsprechenden Mehrwertdaten mit einem Korrekturkoeffizienten, der größer ist als die der zweiten Düsenreihe entsprechenden Mehrwertdaten und erste und zweite Ausstoßdaten erzeugt durch respektive Binärisierung der der ersten Düsenreihe entsprechenden korrigierten Mehrwertdaten und der der zweiten Düsenreihe entsprechenden korrigierten Mehrwertdaten.

10. Bildverarbeitungsvorrichtung nach einem der Ansprüche 1 bis 9, ferner umfassend:
eine Druckeinrichtung, die konfiguriert ist zum Drucken eines Bilds durch Ausstoßen von Tinte aus einem Druckkopf gemäß der Ausstoßdaten.

11. Bildverarbeitungsverfahren, bei dem Ausstoßdaten erzeugt werden, zum Ausstoßen einer vorbestimmten Tintenfarbe auf ein Druckmedium (S) unter Verwendung eines Druckkopfs (11), wobei der Druckkopf eine erste Düsenreihe aufweist, in der Düsen (12) zum Ausstoßen einer vorbestimmten Tintenfarbe in einer vorbestimmten Richtung angeordnet sind sowie eine zweite Düsenreihe, in der Düsen (12) zum Ausstoßen der vorbestimmten Tintenfarbe in der vorbestimmten Richtung angeordnet sind, wobei die erste Düsenreihe und die zweite Düsenreihe in einer die vorbestimmte Richtung kreuzenden Richtung angeordnet sind: wobei das Ausstoßen auf das Druckmedium (S) in Reihenfolge von der zweiten Düsenreihe und der ersten Düsenreihe durchgeführt wird, während das Druckmedium (S) hinsichtlich des Druckkopfs (11) in der kreuzenden Richtung relativ bewegt wird, wobei das Bildverarbeitungsverfahren folgenden Schritt umfasst:
Erzeugen der Ausstoßdaten, so dass die Pixelanzahl, für die die vorbestimmte Tintenfarbe von den ersten Düsen ausgestoßen wird größer ist als die Pixelanzahl, für die die vorbestimmte Tintenfarbe von den zweiten Düsen ausgestoßen wird, falls Bilddaten mit demselben Wert zu Pixeln eingegeben werden, die den in der ersten Düsenreihe enthaltenen ersten Düsen entsprechen, und Pixeln, die den in der zweiten Düsenreihe enthaltenen zweiten Düsen entsprechen.

12. Bildverarbeitungsverfahren nach Anspruch 11,
wobei der Erzeugungsschritt sich auf eine Schwellenwertmatrix bezieht, in der ein Schwellenwert für ein jeweiliges der mehreren Pixel eingestellt wird, um die Ausstoßdaten zu erzeugen, so dass ein Ausstoßen von Tinte für ein Pixel bestimmt ist, in dem ein durch die Bilddaten angegebener Wert größer als der in der Schwellenwertmatrix eingestellte Schwellenwert ist, und ein Nicht-Ausstoßen von Tinte für ein Pixel bestimmt ist, in dem der durch die Bilddaten angegebene Wert kleiner ist als der in der Schwellenwertmatrix eingestellte Schwellenwert, und
wobei der Schwellenwert für ein jeweiliges Pixel in der Schwellenwertmatrix derart eingestellt ist, dass ein durchschnittlicher Wert der Schwellenwerte der mehreren den ersten Düsen entsprechenden Pixel kleiner ist als ein durchschnittlicher Wert der Schwellenwerte der mehreren den zweiten Düsen entsprechenden Pixel.

13. Bildverarbeitungsverfahren nach Anspruch 12, wobei der Schwellenwert für einen jeweiligen Pixel in der Schwellenwertmatrix derart eingestellt ist, dass (i) die den ersten Düsen entsprechende Pixelanzahl, von denen ein jeweiliges einen Schwellenwert aufweist, der kleiner ist als ein erster Wert, im Wesentlichen gleich der den zweiten Düsen entsprechenden Pixelanzahl ist, von denen ein jeweiliges einen Schwellenwert aufweist, der kleiner ist als der erste Wert und (ii) die den ersten Düsen entsprechende Pixelanzahl, von denen ein jeweiliges einen Schwellenwert aufweist, der größer ist als der erste Wert und kleiner als ein zweiter Wert, größer als die den zweiten Düsen entsprechende Pixelanzahl ist, von denen ein jeweiliges einen Schwellenwert aufweist, der größer ist als der erste Wert und kleiner als der zweite Wert.

14. Bildverarbeitungsverfahren nach Anspruch 12, wobei der Schwellenwert für ein jeweiliges Pixel in der Schwellenwertmatrix derart eingestellt ist, dass die Anzahl der fortlaufenden Pixel in der kreuzenden Richtung von den den ersten Düsen entsprechenden Pixeln, von denen ein jeweiliges einen Schwellenwert aufweist, der größer ist als ein erster Wert, größer ist als die Anzahl der fortlaufenden Pixel in der kreuzenden Richtung von den den zweiten Düsen entsprechenden Pixeln, von denen ein jeweiliges einen Schwellenwert aufweist, der größer ist als der erste Wert.

15. Bildverarbeitungsverfahren nach einem der Ansprüche 12 bis 14, wobei der Schwellenwert in der Schwellenwertmatrix derart eingestellt ist, dass eine durch einen am Druckmedium gemäß den Ausstoßdaten durchgeführten Druckvorgang gebildete Punktanordnung eine Charakteristik blauen Rauschens aufweist.

## Revendications

1. Appareil de traitement d'image (100) générant des données d'éjection pour éjecter une couleur prédéterminée d'encres sur un support d'impression (S) en utilisant une tête d'impression (11), la tête d'impression comportant une première rangée de buses dans laquelle des buses (12) destinées à éjecter une couleur d'encres prédéterminée sont disposées dans une direction prédéterminée et une deuxième rangée de buses dans laquelle des buses (12) destinées à éjecter la couleur d'encres prédéterminée sont disposées dans la direction prédéterminée, la première rangée de buses et la deuxième rangée de buses étant disposées dans une direction d'intersection coupant la direction prédéterminée : l'éjection sur le support d'impression (S) étant effectuée dans un ordre partant de la deuxième rangée de buses et de la première rangée de buses tout en déplaçant relativement le support d'impression (S) par rapport à la tête d'impression (11) dans la direction d'intersection, l'appareil de traitement d'image comprenant :
un moyen de génération (108) configuré pour générer les données d'éjection de façon que, dans un cas où des données d'image ayant la même valeur sont fournies en entrée aux pixels correspondant aux premières buses contenues dans la première rangée de buses et aux pixels correspondant aux deuxièmes buses contenues dans la deuxième rangée de buses, le nombre de pixels sur lesquels la couleur prédéterminée d'encres est éjectée à partir des premières buses soit supérieur au nombre de pixels sur lesquels la couleur prédéterminée d'encres est éjectée à partir des deuxièmes buses.

2. Appareil de traitement d'image selon la revendication 1,
dans lequel le moyen de génération se réfère à une matrice de valeurs de seuil dans laquelle une valeur de seuil est définie pour chacun d'une pluralité de pixels pour générer les données d'éjection de façon qu'une éjection d'encre soit déterminée sur un pixel dans lequel une valeur indiquée par les données d'image est supérieure à la valeur de seuil définie dans la matrice de valeurs de seuil et qu'une non-éjection d'encre soit déterminée sur un pixel dans lequel la valeur indiquée par les données d'image est inférieure à la valeur de seuil définie dans la matrice de valeurs de seuil, et
dans lequel la valeur de seuil pour chaque pixel est définie dans la matrice de valeurs de seuil de façon qu'une valeur moyenne des valeurs de seuil d'une pluralité de pixels correspondant aux premières buses soit inférieure à une valeur moyenne des valeurs de seuil d'une pluralité de pixels correspondant aux deuxièmes buses.

3. Appareil de traitement d'image selon la revendication 2,
dans lequel la valeur de seuil pour chaque pixel est définie dans la matrice de valeurs de seuil de façon (i) que le nombre de pixels correspondant aux premières buses et ayant chacun une valeur de seuil inférieure à une première valeur, soit sensiblement égal au nombre de pixels correspondant aux deuxièmes buses et ayant chacun une valeur de seuil inférieure à la première valeur et (ii) que le nombre de pixels correspondant aux premières buses et ayant chacun une valeur de seuil supérieure à la première valeur et inférieure à une deuxième valeur, soit supérieur au nombre de pixels correspondant aux deuxièmes buses et ayant chacun une valeur de seuil supérieure à la première valeur et inférieure à la deuxième valeur.

4. Appareil de traitement d'image selon la revendication 2,
dans lequel la valeur de seuil pour chaque pixel est définie dans la matrice de valeurs de seuil de façon que le nombre de pixels continus dans la direction d'intersection parmi les pixels correspondant aux premières buses et ayant chacun une valeur de seuil supérieure à une première valeur, soit supérieur au nombre de pixels continus dans la direction d'intersection parmi les pixels correspondant aux deuxièmes buses et ayant chacun une valeur de seuil supérieure à la première valeur.

5. Appareil de traitement d'image selon l'une quelconque des revendications 2 à 4,
dans lequel la valeur de seuil est définie dans la matrice de valeurs de seuil de façon qu'un agencement de points formé par une opération d'impression effectuée sur le support d'impression conformément aux données d'éjection présente une caractéristique de bruit bleu.

6. Appareil de traitement d'image selon l'une quelconque des revendications 1 à 5,
dans lequel la première rangée de buses est disposée sur un côté aval dans une direction de déplacement du support d'impression par rapport à la deuxième rangée de buses.

7. Appareil de traitement d'image selon l'une quelconque des revendications 1 à 6,
dans lequel la tête d'impression comporte en outre une troisième rangée de buses dans laquelle des buses destinées à éjecter la couleur prédéterminée d'encres sont disposées dans la direction prédéterminée,
dans lequel la troisième rangée de buses est disposée du côté amont dans la direction de déplacement par rapport à la première rangée de buses et est disposée sur le côté aval dans la direction de déplacement par rapport à la deuxième rangée de buses, et
dans lequel le moyen de génération génère les données d'éjection de façon que, dans un cas où une donnée d'image ayant la même valeur est fournie en entrée aux pixels correspondant aux premières buses, aux pixels correspondant aux deuxièmes buses et aux pixels correspondant aux troisièmes buses contenues dans la troisième rangée de buses, le nombre de pixels sur lesquels la couleur prédéterminée d'encres est éjectée à partir des troisièmes buses, soit inférieur au nombre de pixels sur lesquels la couleur d'encre prédéterminée est éjectée à partir des premières buses et soit supérieur au nombre de pixels sur lesquels la couleur prédéterminée d'encres est éjectée à partir des deuxièmes buses.

8. Appareil de traitement d'image selon la revendication 1,
dans lequel le moyen de génération génère des premières données d'éjection et des deuxièmes données d'éjection en effectuant un processus de binarisation tout en répartissant une erreur générée dans un pixel cible pendant le processus de binarisation sur des pixels périphériques non soumis au processus de binarisation conformément à un coefficient prédéterminé, et
dans lequel le coefficient prédéterminé est corrélé avec chaque pixel afin qu'un plus grand nombre d'erreurs soient réparties sur les pixels correspondant aux premières buses par comparaison aux pixels correspondant aux deuxièmes buses.

9. Appareil de traitement d'image selon la revendication 1,
dans lequel le moyen de génération calcule des données à valeurs multiples corrigées correspondant à la première rangée de buses et des données à valeurs multiples corrigées correspondant à la deuxième rangée de buses en multipliant les données à valeurs multiples correspondant à la première rangée de buses par un coefficient de correction supérieur aux données à valeurs multiples correspondant à la deuxième rangée de buses et génère des premières données d'éjection et des deuxièmes données d'éjection en binarisant les données à valeurs multiples corrigées correspondant à la première rangée de buses et les données à valeurs multiples corrigées correspondant à la deuxième rangée de buses respectivement.

10. Appareil de traitement d'image selon l'une quelconque des revendications 1 à 9, comprenant en outre :
un moyen d'impression configuré pour imprimer une image en éjectant une encre à partir de la tête d'impression conformément aux données d'éjection.

11. Procédé de traitement d'image générant des données d'éjection pour éjecter une couleur prédéterminée d'encres sur un support d'impression (S) en utilisant une tête d'impression (11), la tête d'impression comportant une première rangée de buses dans laquelle des buses (12) destinées à éjecter une couleur prédéterminée d'encres sont disposées dans une direction prédéterminée et une deuxième rangée de buses dans laquelle des buses (12) destinées à éjecter la couleur prédéterminée d'encres sont disposées dans la direction prédéterminée, la première rangée de buses et la deuxième rangée de buses étant disposées dans une direction d'intersection qui coupe la direction prédéterminée : l'éjection sur le support d'impression (S) étant effectuée dans un ordre partant de la deuxième rangée de buses et de la première rangée de buses tout en déplaçant relativement le support d'impression (S) par rapport à la tête d'impression (11) dans la direction d'intersection, le procédé de traitement d'image comprenant une étape consistant à :
générer les données d'éjection de façon que, dans un cas où des données d'image ayant la même valeur sont fournies en entrée à des pixels correspondant à des premières buses contenues dans la première rangée de buses et à des pixels correspondant à des deuxièmes buses contenues dans la deuxième rangée de buses, le nombre de pixels sur lesquels la couleur prédéterminée d'encres est éjectée à partir des premières buses, soit supérieur au nombre de pixels sur lesquels la couleur prédéterminée d'encres est éjectée à partir des deuxièmes buses.

12. Procédé de traitement d'image selon la revendication 11,
dans lequel l'étape de génération se réfère à une matrice de valeurs de seuil dans laquelle une valeur de seuil est définie pour chacun d'une pluralité de pixels pour générer les données d'éjection de façon qu'une éjection d'encre soit déterminée sur un pixel dans lequel une valeur indiquée par les données d'image est supérieure à la valeur de seuil définie dans la matrice de valeurs de seuil et qu'une non-éjection d'encre soit déterminée sur un pixel dans lequel la valeur indiquée par les données d'image est inférieure à la valeur de seuil définie dans la matrice de valeurs de seuil, et
dans lequel la valeur de seuil pour chaque pixel est définie dans la matrice de valeurs de seuil de façon qu'une valeur moyenne des valeurs de seuil d'une pluralité de pixels correspondant aux premières buses soit inférieure à une valeur moyenne des valeurs de seuil d'une pluralité de pixels correspondant aux deuxièmes buses.

13. Procédé de traitement d'image selon la revendication 12,
dans lequel la valeur de seuil pour chaque pixel est définie dans la matrice de valeurs de seuil de façon (i) que le nombre de pixels correspondant aux premières buses et ayant chacun une valeur de seuil inférieure à une première valeur, soit sensiblement égal au nombre de pixels correspondant aux deuxièmes buses et ayant chacun une valeur de seuil inférieure à la première valeur et (ii) que le nombre de pixels correspondant aux premières buses et ayant chacun une valeur de seuil supérieure à la première valeur et inférieure à une deuxième valeur, soit supérieur au nombre de pixels correspondant aux deuxièmes buses et ayant chacun une valeur de seuil supérieure à la première valeur et inférieure à la deuxième valeur.

14. Procédé de traitement d'image selon la revendication 12,
dans lequel la valeur de seuil pour chaque pixel est définie dans la matrice de valeurs de seuil de façon que le nombre de pixels continus dans la direction d'intersection parmi les pixels correspondant aux premières buses et ayant chacun une valeur de seuil supérieure à une première valeur, soit supérieur au nombre de pixels continus dans la direction d'intersection parmi les pixels correspondant aux deuxièmes buses et ayant chacun une valeur de seuil supérieure à la première valeur.

15. Procédé de traitement d'image selon l'une quelconque des revendications 12 à 14,
dans lequel la valeur de seuil est définie dans la matrice des valeurs de seuil de façon qu'un agencement de points formé par une opération d'impression effectuée sur le support d'impression conformément aux données d'éjection présente une caractéristique de bruit bleu.
